# EUROPÄISCHE PATENTSCHRIFT

(11) **EP 1 378 557 B1**
(45) Veröffentlichungstag und Bekanntmachung des Hinweises auf die Patenterteilung: **21.02.2007**
(21) Anmeldenummer: 03013466.2
(22) Anmeldetag: 25.06.2003
(51) Int. Cl.: C09K 19/42, C09K 19/44

(54) **Flüssigkristallines Medium**
Liquid crystalline medium
Milieu liquide cristallin

(30) Priorität: 06.07.2002 DE 10230597
(43) Veröffentlichungstag der Anmeldung: 07.01.2004
(73) Patentinhaber: Merck Patent GmbH, 64293 Darmstadt (DE)
(72) Erfinder: Klasen-Memmer, Melanie, Dr., 67259 Heuchelheim (DE); Klement, Dagmar, 64846 Gross-Zimmern (DE); Bremer, Matthias, Dr., 64295 Darmstadt (DE)

(56) Entgegenhaltungen:
- WO-A-02/44801
- WO-A-95/22586
- WO-A-97/00600
- WO-A-99/50210
- DE-A- 2 636 684
- DE-A- 19 940 655
- US-A- 6 159 393
- US-A1- 2001 010 366

## Beschreibung

Die vorliegende Erfindung betrifft ein flüssigkristallines Medium auf der Basis eines Gemisches von Verbindungen mit negativer dielektrischer Anisotropie enthaltend eine oder mehrere polymerisierbare Verbindungen, sowie dessen Verwendung für elektrooptische Zwecke und dieses Medium enthaltende Anzeigen, insbesondere für Anzeigen beruhend auf dem DAP- (Deformation aufgerichteter Phasen), ECB- (electrically controlled birefringence), CSH- (colour super homeotropic) oder VA-(vertically aligned) Effekt, wie z.B. MVA- (multidomain vertically aligned) oder PVA- (patterned vertically aligned) Effekt.

Das Prinzip der elektrisch kontrollierten Doppelbrechung, der ECB- oder auch DAP-Effekt ("Deformation aufgerichteter Phasen") wurde erstmals 1971 beschrieben (M. F. Schieckel and K. Fahrenschon, "Deformation of nematic liquid crystals with vertical orientation in electrical fields", Appl. Phys. Lett. 19 (1971), 3912). Es folgten Arbeiten von J. F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten K₃₃/K₁₁, hohe Werte für die optische Anisotropie Δn und Werte für die dielektrische (DK-) Anisotropie Δε von etwa -0,5 bis etwa -5 aufweisen müssen, um für hochinformative Anzeigeelemente basierend auf dem ECB-Effekt eingesetzt werden zu können. Auf dem ECB-Effekt basierende elektrooptische Anzeigeelemente weisen im ausgeschalteten Zustand eine homöotrope oder vertikale Randorientierung, d.h. eine Orientierung weitgehend senkrecht zu den Elektrodenoberflächen, auf.

Neuere Arten von ECB-Anzeigen mit homöotroper Randorientierung sind solche basierend auf dem CSH- oder VA- (vertically aligned) Effekt, wobei letzterer auch unter den Begriffen VAN- (vertically aligned nematic) und VAC- (vertically aligned cholesteric) Effekt bekannt ist. CSH-Anzeigen sind bekannt unter anderem aus H.Hirai, Japan Displays 89 Digest, 184 (1989), J. F. Clerc et al., Japan Displays 89 Digest, 188 (1989) und J. F. Clerc, SID 91 Digest, 758 (1991). VA-Anzeigen wurden u.a. in S. Yamauchi et al., SID Digest of Technical Papers, S. 378ff (1989), VAC-Anzeigen in K. A. Crabdall et al., Appl. Phys. Lett. 65, 4 (1994) beschrieben.

Die neueren VA-Anzeigen enthalten wie die bereits früher bekannten ECB-Anzeigen eine Schicht eines flüssigkristallinen Mediums zwischen zwei transparenten Elektroden, wobei das Flüssigkristallmedium einen negativen Wert der DK-Anisotropie Δε aufweist. Die Moleküle dieser Flüssigkristallschicht sind im ausgeschalteten Zustand homöotrop oder gekippt (engl.: "tilted") homöotrop orientiert. Aufgrund der negativen DK-Anisotropie findet im eingeschalteten Zustand eine Umorientierung der Flüssigkristallmoleküle parallel zu den Elektrodenflächen statt.

Im Gegensatz zu den herkömmlichen ECB-Anzeigen, in denen die Flüssigkristallmoleküle im eingeschalteten Zustand eine parallele Orientierung mit einer über die ganze Flüssigkristallzelle einheitlichen Vorzugsrichtung aufweisen, ist in den VA- und VAC-Anzeigen diese einheitliche parallele Ausrichtung üblicherweise nur auf kleine Domänen innerhalb der Zelle beschränkt. Zwischen diesen Domänen, auch als Tilt-Domänen (engl.: tilt domains) bezeichnet, existieren Disklinationen.

Als Folge hiervon weisen VA-Anzeigen verglichen mit den herkömmlichen ECB-Anzeigen eine größere Blickwinkelunabhängigkeit des Kontrastes und der Graustufen auf. Außerdem sind solche Anzeigen einfacher herzustellen, da eine zusätzliche Behandlung der Elektrodenoberfläche zur einheitlichen Orientierung der Moleküle im eingeschalteten Zustand, wie z.B. durch Reiben, nicht mehr notwendig ist.

Im Unterschied zu den VA-Anzeigen enthalten die Flüssigkristallmedien in VAC-Anzeigen zusätzlich noch eine oder mehrere chirale Verbindungen, wie z.B. chirale Dotierstoffe, die im eingeschalteten Zustand eine helikale Verdrillung der Flüssigkristallmoleküle in der Flüssigkristallschicht um einen Winkel zwischen 0 und 360° bewirken. Der Verdrillungswinkel beträgt dabei vorzugsweise etwa 90°.

Für Anzeigen mit vertikaler Randorientierung wurde außerdem die Verwendung von Kompensatoren, wie z.B. optisch uniaxial negative Kompensationsfilme, vorgeschlagen, um eine unerwünschte Lichtdurchlässigkeit der Anzeige im ausgeschalteten Zustand unter schrägem Beobachtungswinkel zu kompensieren.

Außerdem ist es möglich, durch eine spezielle Ausgestaltung der Elektroden die Vorzugsrichtung des Kipp- oder Tiltwinkels zu kontrollieren, ohne daß eine zusätzliche Oberflächenbehandlung der Elektroden, wie etwa durch eine Orientierungsschicht, nötig wäre. Eine CSH-Anzeige dieses Typs wird beispielsweise in Yamamoto et al., SID 91 Digest, 762 (1991) beschrieben.

Die oben beschriebenen Anzeigen können vom Aktivmatrix- oder Passivmatrix-(Multiplex-)Typ sein. So wurden beispielsweise ECB- und VA-Anzeigen beschrieben, die als Aktivmatrix- oder Multiplex-Anzeigen betrieben werden, während CSH-Anzeigen üblicherweise als Multiplex-Flüssigkristall-Anzeigen (MFK) betrieben werden.

Obwohl die oben beschriebenen VA-Anzeigen, in denen flüssigkristalline Medien mit negativer dielektrischer Anisotropie verwendet werden, relativ kurze Schaltzeiten aufweisen, besteht die Notwendigkeit zu einer weiteren Verkürzung, insbesondere der Graustufenschaltzeiten. Von der Flüssigkristallseite kann hierzu hauptsächlich ein Beitrag durch die Erniedrigung der Rotationsviskosität der FK-Mischungen geleistet werden.

Ein weiteres Problem der VA-Technologie besteht darin, ein "kontrolliertes" Schalten zu erreichen, um das Entstehen störender Disklinationslinien zu vermeiden. Hierzu sind spezielle Techniken notwendig, da durch die verwendeten Orientierungsschichten (zur Orientierung der FK-Moleküle), die üblicherweise Polyimide enthalten, nahezu keine Vorzugsorientierung der FK-Moleküle (sog. "Pretilt") erzeugt werden kann. Beispielsweise wird beim sog. MVA-mode durch Hinzufügen sog. "Protrusions" in der Zelle den Molekülen ein bestimmter Pretilt zugewiesen, oder es wird der sog. "Fringe Field Effekt" ausgenutzt, wie etwa beim PVA-mode.

MVA-Anzeigen werden beispielsweise beschrieben in A. Takeda, S. Kataoka, T. Sasaki, H. Chida, H. Tsuda, K. Ohmuro, Y. Koike, T. Sasabayashi and K. Okamoto, "A Super-High-lmage-Quality Multi-Domain Vertical Alignment LCD by New Rubbing-Less Technology", SID '98 Digest, pp. 1077-1080, (1998).

PVA-Anzeigen werden beispielsweise beschrieben in K. H. Kim, K. Lee, S. B. Park, J. K. Song, S. Kim and J. H. Souk, "Domain Divided Vertical Alignment Mode with Optimized Fringe Field Effect", Proceedings of the International Display Research Conference (Asia Display 1998), pp. 38.

Eine neue Technik wird z.B. in EP 1 170 626 A2 oder US 5,963,290 beschrieben. Durch Polymerisieren von polymerisierbaren mesogenen oder flüssigkristallinen Verbindungen, auch als "reaktive Mesogene" (RM) bezeichnet, die der Flüssigkristallmischung in kleinen Mengen zugefügt werden, kann ein bestimmter Pretilt-Winkel eingestellt werden.

Es hat sich jedoch gezeigt, daß mit den bisher zur Verfügung stehenden FK-Materialien noch keine ausreichende Optimierung der elektrooptischen Eigenschaften von VA-Anzeigen möglich ist.

In der DE 199 40 655 A1 werden Aktivmatrix-LCDs offenbart, die Flüssigkristallmedien enthalten, die a) mindestens eine Verbindung der Formel 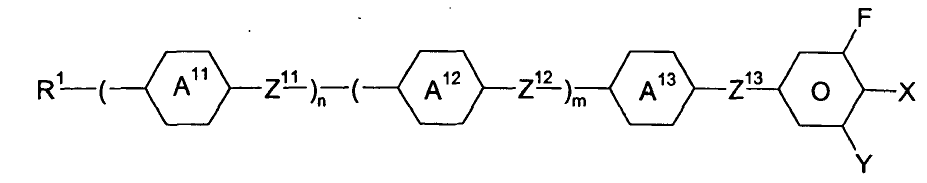 und b) mindestens eine Verbindung der Formel 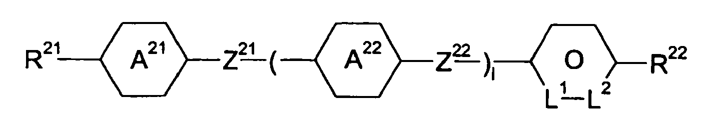 enthalten, wobei die verschiedenen Parameter die in der Anmeldung angegebenen Bedeutungen haben.

In der US 2001/0010366 A1 wird ein flüssigkristallines Medium offenbart, das auf einer Mischung von polaren Verbindungen mit negativer dielektrischer Anisotropie basiert, welches eine oder mehrere Verbindungen der allgemeinen Formel 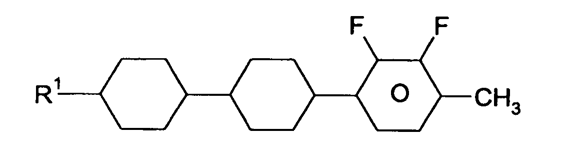 enthält, in welcher R¹ eine Alkoxygruppe mit bis zu 12 Kohlenstoffatom bedeutet.

In der WO 02/44801 A2 werden polymerisierbare flüssigkristalline Zusammensetzungen sowie flüssigkristalline Polymere offenbart, die zur Herstellung von Orientierungsschichten ("Alignment layers") eingesetzt werden.

Es besteht somit immer noch ein großer Bedarf nach MFK-Anzeigen, insbesondere vom ECB-, VA-, MVA-, PVA- und CSH-Typ mit sehr hohem spezifischen Widerstand bei gleichzeitig großem Arbeitstemperaturbereich, kurzen Schaltzeiten auch bei tiefen Temperaturen und niedriger Schwellenspannung, die eine Vielzahl von Graustufen, einen hohen Kontrast und einen weiten Blickwinkel ermöglichen, niedrige Werte der "voltage holding ratio" (HR) nach UV-Belastung aufweisen und die oben beschriebenen Nachteile nicht oder nur in geringem Maße zeigen.

Der Erfindung lag somit die Aufgabe zugrunde, MFK-Anzeigen bereitzustellen, die die oben angegebenen Nachteile nicht oder nur in geringerem Maße aufweisen, die Einstellung eines Pretilt-Winkels ermöglichen und vorzugsweise gleichzeitig sehr hohe spezifische Widerstände, niedrige Schwellenspannungen und niedrige Schaltzeiten besitzen.

Es wurde nun gefunden, daß diese Aufgabe gelöst werden kann, wenn man in FK-Anzeigen erfindungsgemäße Medien verwendet.

Gegenstand der Erfindung ist somit ein flüssigkristallines Medium auf der Basis eines Gemisches von polaren Verbindungen mit negativer dielektrischer Anisotropie, dadurch gekennzeichnet, daß es
eine oder mehrere Verbindungen der Formel I 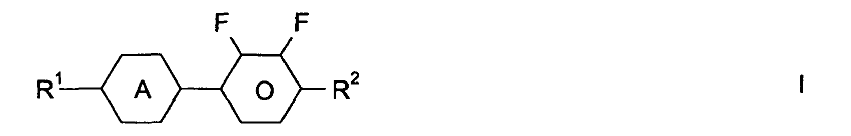 eine oder mehrere Verbindungen der Formel II 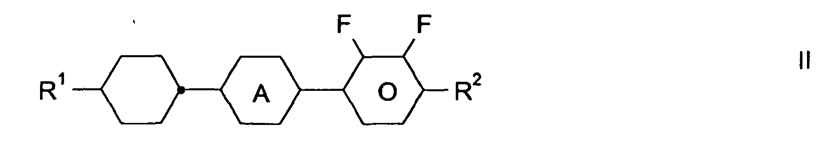 sowie eine oder mehrere polymerisierbare Verbindungen ausgewählt aus der Formel I* enthält,

P¹-Sp¹-X¹-A¹-(Z¹-A²)ₙ-R I*

worin
- R¹ und R²: jeweils unabhängig voneinander Alkyl mit 1 bis 12 C-Atomen, wobei auch ein oder zwei nicht benachbarte CH₂-Gruppen durch -O-, -CO-, -OCO- oder -COO- so ersetzt sein können, daß O-Atome nicht direkt miteinander verknüpft sind, 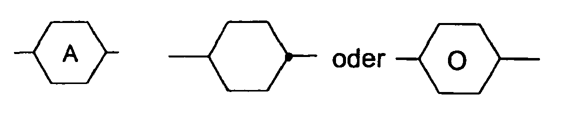
- R: H, F, Cl, CN, SCN, SF₅H, NO₂, geradkettiges oder verzweigtes Alkyl mit 1 bis 12 C-Atomen, wobei auch ein oder zwei nicht benachbarte CH₂-Gruppen durch -O-, -S-, -CH=CH-, -CO-, -OCO-, -COO-, -O-COO-, -S-CO-, -CO-S- oder -C≡C- so ersetzt sein können, daß O- und/oder S-Atome nicht direkt miteinander verknüpft sind, oder -X²-Sp²-P²,
- P¹ und P²: jeweils unabhängig voneinander Acrylat, Methacrylat, Vinyloxy, Propenylether oder Epoxy;
- Sp¹ und Sp²: jeweils unabhängig voneinander eine Abstandshaltergruppe oder eine Einfachbindung,
- X¹ und X²: jeweils unabhängig voneinander -O-, -S-, -OCH₂-, -CH₂O-, -CO-, -COO-, -OCO-, -OCO-O-, -CO-NR⁰-, -NR⁰-CO-, -OCH₂-, -CH₂O-, -SCH₂-, -CH₂S-, -CH=CH-COO-, -OOC-CH=CH- oder eine Einfachbindung,
- A¹ und A²: jeweils unabhängig voneinander 1,4-Phenylen, worin auch eine oder mehrere CH-Gruppen durch N ersetzt sein können, 1,4-Cyclohexylen, worin auch eine oder mehrere nicht benachbarte CH₂-Gruppen durch O und/oder S ersetzt sein können, 1,4-Cyclohexenylen, 1,4-Bicyclo-(2,2,2)-octylen, Piperidin-1,4-diyl, Naphthalin-2,6-diyl, Decahydronaphthalin-2,6-diyl, 1,2,3,4-Tetrahydronaphthalin-2,6-diyl oder Indan-2,5-diyl, wobei alle diese Gruppen unsubstituiert oder durch L ein- oder mehrfach substituiert sein können,
- L: F, Cl, CN oder Alkyl, Alkoxy, Alkylcarbonyl, Alkoxycarbonyl oder Alkylcarbonyloxy mit 1 bis 7 C-Atomen, worin auch ein oder mehrere H-Atome durch F oder Cl ersetzt sein können,
- Z¹: -O-, -S-, -CO-, -COO-, -OCO-, -O-COO-, -OCH₂-, -CH₂O-, -SCH₂-, -CH₂S-, -CF₂O-, -OCF₂-, -CF₂S-, -SCF₂-_{,} -CH₂CH₂-, -CF₂CH₂-, -CH₂CF₂-, -CF₂CF₂-, -CH=CH-, -CF=CF-, -C≡C-, -CH=CH-COO-, -OCO-CH=CH-, CR⁰R⁰⁰ oder eine Einfachbindung,
- R⁰ und R⁰⁰: jeweils unabhängig voneinander H oder Alkyl mit 1 bis 4 C-Atomen, und
- n: 0, 1 oder 2
bedeuten.

Ein weiterer Gegenstand der Erfindung ist eine elektrooptische Anzeige mit einer Aktivmatrix-Adressierung, insbesondere eine Anzeige basierend auf dem DAP-, ECB-, VA-, MVA-, PVA- oder CSH-Effekt, dadurch gekennzeichnet, daß sie als Dielektrikum ein flüssigkristallines Medium nach Anspruch 1 enthält.

In den Verbindungen der Formel I und II ist R¹ vorzugsweise geradkettiges Alkyl mit 1 bis 8 C-Atomen, besonders bevorzugt Methyl, Ethyl, n-Propyl, n-Butyl oder n-Pentyl. R² ist vorzugsweise geradkettiges Alkyl oder Alkoxy mit 1 bis 8 C-Atomen, besonders bevorzugt Methoxy, Ethoxy, n-Propoxy oder n-Butoxy.

Die Verbindungen der Formel I und II sind vorzugsweise ausgewählt aus den folgenden Formeln: 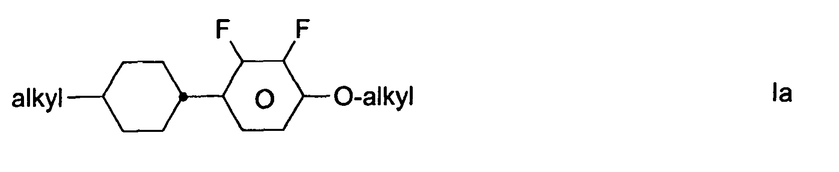 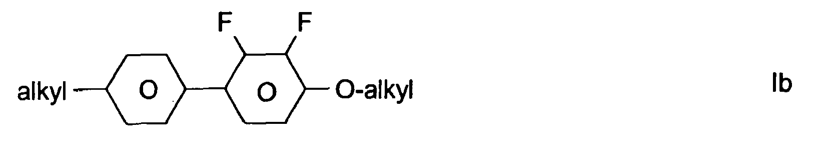 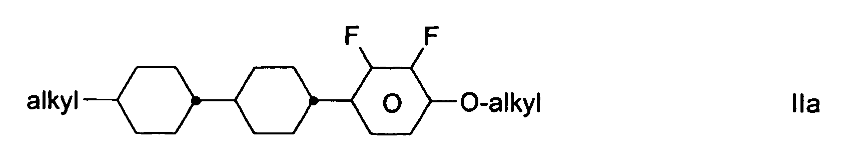 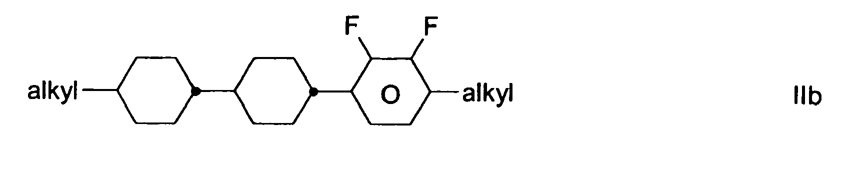 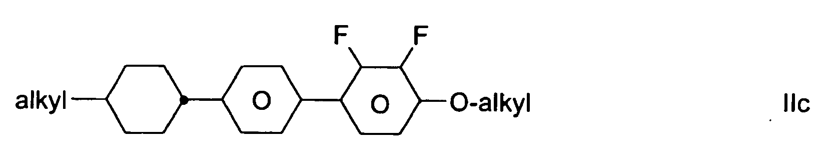 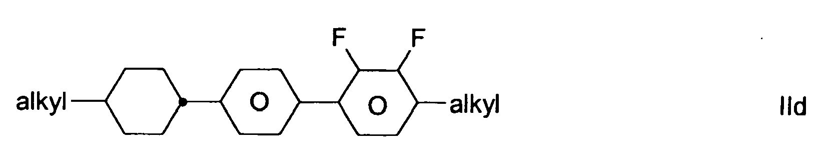 worin alkyl C₁₋₆-alkyl bedeutet.

R ist vorzugsweise Alkyl oder Alkoxy mit 1 bis 12 C-Atomen oder -X²-Sp²-P², besonders bevorzugt -X²-Sp²-P².

P¹ und P² bedeuten vorzugsweise Acrylat oder Methacrylat.

Geeignete Abstandshaltergruppen Sp¹ und Sp² (engl. "spacer") sind dem Fachmann bekannt und in der Literatur beschrieben. Sp¹ und Sp² bedeuten vorzugsweise geradkettiges oder verzweigtes Alkylen mit 1 bis 8-Atomen. Besonders bevorzugt sind Verbindungen der Formel I*, worin Sp¹-X¹ und Sp²-X² eine Einfachbindung bedeuten.

A¹ und A² bedeuten vorzugsweise 1,4-Cyclohexylen oder unsubstituiertes oder durch L ein- oder mehrfach substituiertes 1,4-Phenylen oder Naphthalin-2,6-diyl.

L ist vorzugsweise F, Cl, CN, NO₂, CH₃, C₂H₅, OCH₃, OC₂H₅, COCH₃, COC₂H₅, COOCH₃, COOC₂H₅, CF₃, OCF₃, OCHF₂ oder OC₂F₅, besonders bevorzugt F, Cl, CN, CH₃, C₂H₅, OCH₃, COCH₃ oder OCF₃, insbesondere F, Cl, CH₃, OCH₃ oder COCH₃.

Z ist vorzugsweise -COO-, -OCO- oder eine Einfachbindung, ferner CH₂, CH(CH₃) oder C(CH₃)₂.

Besonders bevorzugt sind polymerisierbare Verbindungen ausgewählt aus den folgenden Formeln: 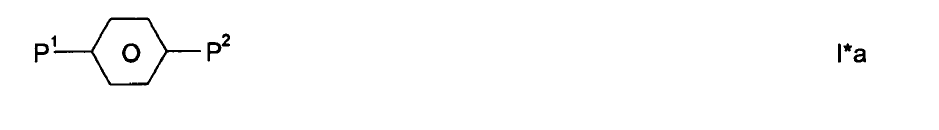 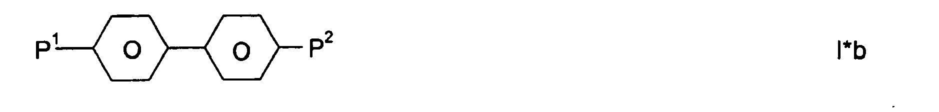 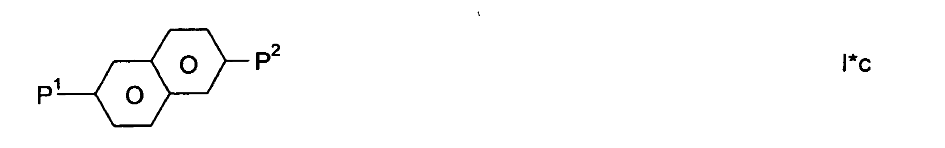 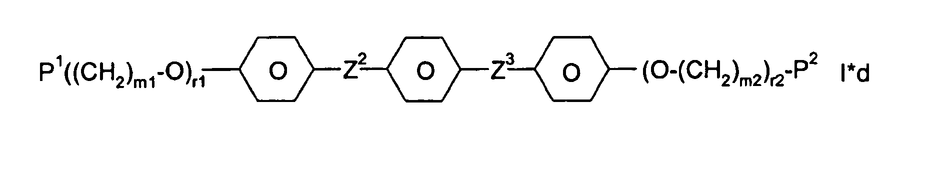 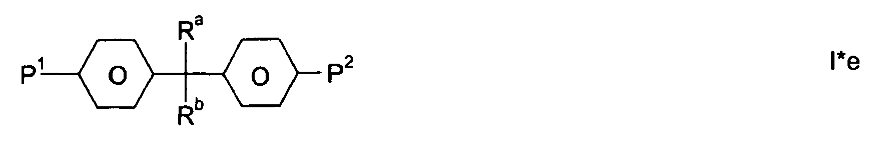 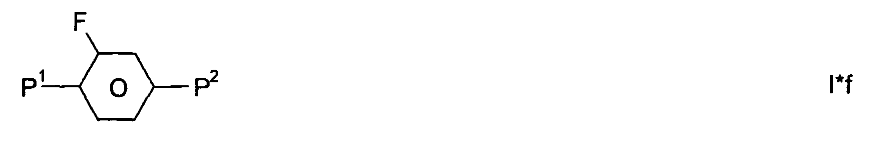 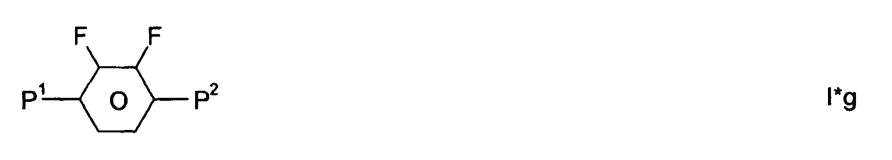 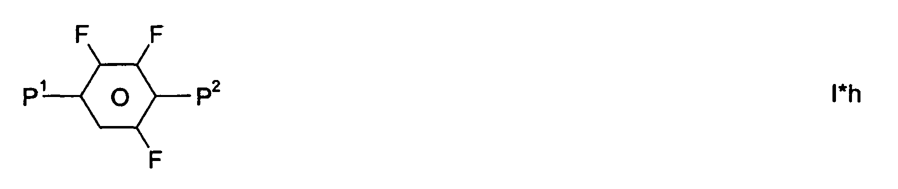 worin P¹ und P² die oben angegebene Bedeutung besitzen und vorzugsweise Acrylat oder Methacrylat bedeuten, Z² und Z³ jeweils unabhängig voneinander eine der für Z¹ angegebenen Bedeutungen besitzen und vorzugsweise -COO- oder -OCO bedeuten, m1 und m2 jeweils unabhängig voneinander 1 bis 8 bedeuten, r1 und r2 jeweils unabhängig voneinander 0 oder 1, vorzugsweise 0 bedeuten, und R^{a} und R^{b} jeweils unabhängig voneinander H oder CH₃ bedeuten.

Die Phenylringe in Formel I*a bis I*e können auch in 2-, 3- und/oder 5-Position durch L wie oben definiert substituiert sein.

Besonders bevorzugt sind Verbindungen der Formel I*a, I*b, I*c und I*e, insbesondere worin P¹ und P² Acrylat oder Methacrylat bedeuten.

Die polymerisierbaren Verbindungen werden vorzugsweise durch Photopolymerisation, z.B. durch UV-Bestrahlung in Gegenwart eines geeigneten Initiators polymerisiert. Geeignete Bedingungen für die Polymerisation sowie geeignete Arten und Mengen der Initiatoren sind dem Fachmann bekannt und in der Literatur beschrieben. Für die radikalische Polymerisation eignen sich z.B. die kommerziell erhältlichen Photoinitiatoren Irgacure651®, Irgacure184®, oder Darocure1173® (Ciba Geigy AG). Die polymerisierbaren Verbindungen enthalten vorzugsweise 0,1 bis 5 Gew.-%, besonders bevorzugt 1 bis 3 Gew.-% eines oder mehrerer Photoinitiatoren.

Die Kombination von Verbindungen der Formel I und II mit polymerisierbaren Verbindungen der Formel I* bewirkt in den erfindungsgemäßen Medien niedrige Schwellenspannungen, niedrige Rotationsviskositäten und sehr gute Tieftemperaturstabilitäten bei gleichbleibend hohen Klärpunkten und hohen HR-Werten, und erlaubt die Einstellung eines Pretilt-Winkels in VA-Anzeigen. Insbesondere zeigen die FK-Medien in VA-Anzeigen im Vergleich zu den Medien aus dem Stand der Technik deutlich verringerte Schaltzeiten, insbesondere auch der Graustufenschaltzeiten.

Einige bevorzugte Ausführungsformen werden im folgenden genannt:
a) Medium, welches zusätzlich eine oder mehrere Verbindungen der Formel III enthält: 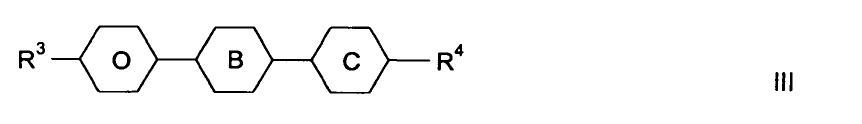 worin R³ und R⁴ jeweils unabhängig voneinander eine der für R¹ in Formel I angegebenen Bedeutungen besitzen und 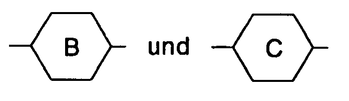 jeweils unabhängig voneinander 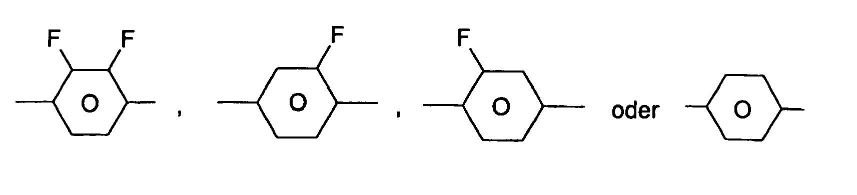 bedeuten.
   Die Verbindungen der Formel III sind vorzugsweise ausgewählt aus den folgenden Formeln 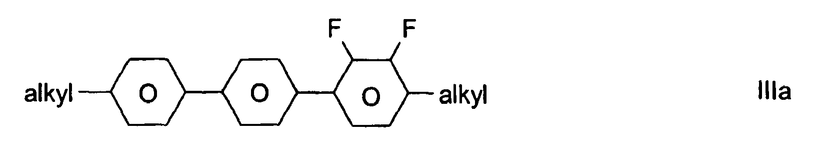 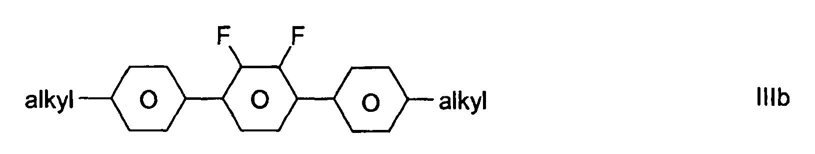 worin alkyl C₁₋₆-alkyl bedeutet.
b) Medium, welches zusätzlich eine oder mehrere Verbindungen der Formel IV enthält: 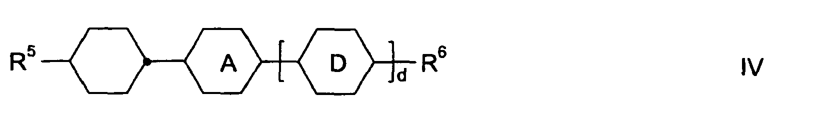 worin
   - R⁵ und R⁶: unabhängig voneinander eine der für R¹ in Formel I angegebenen Bedeutungen haben, 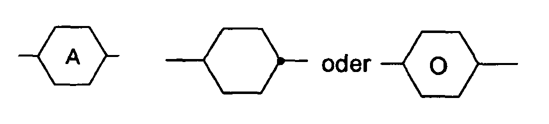 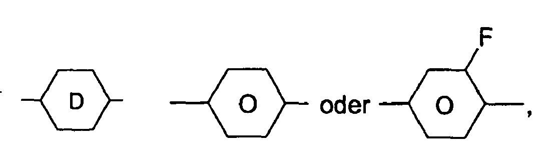
   und
   - d: 0 oder 1 bedeuten.
   Die Verbindungen der Formel IV sind vorzugsweise ausgewählt aus den folgenden Formeln: 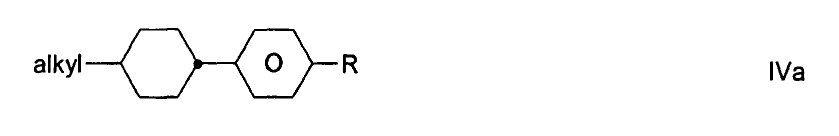 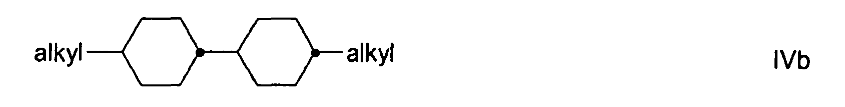 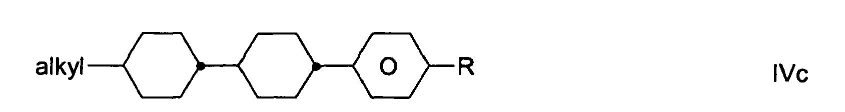 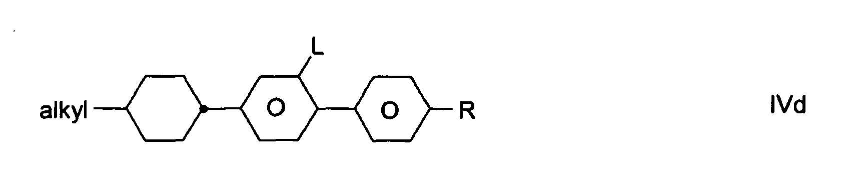 worin alkyl C₁₋₆-alkyl, R C₁₋₆-alkyl oder -alkoxy und L H oder F bedeuten.
c) Medium, welches zusätzlich eine oder mehrere Verbindungen ausgewählt aus den Formeln Va bis Vd enthält: 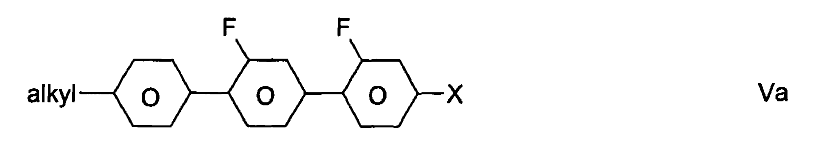 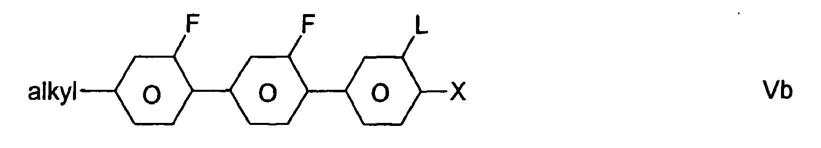 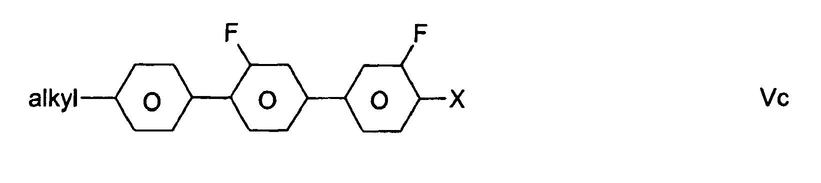 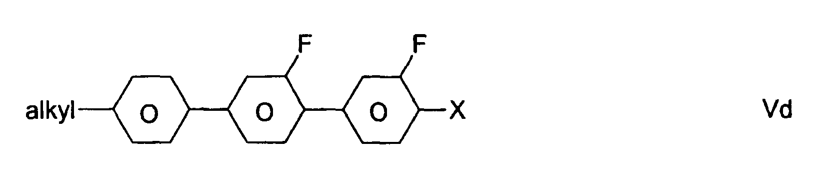 worin alkyl C₁₋₆-alkyl, L H oder F und X F oder Cl bedeuten.
   Besonders bevorzugt sind Verbindungen der Formel Va, worin X F bedeutet.
d) Medium, welches zusätzlich eine oder mehrere Verbindungen ausgewählt aus den Formeln Vla und Vlb enthält: 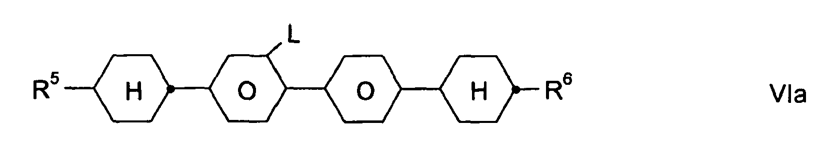 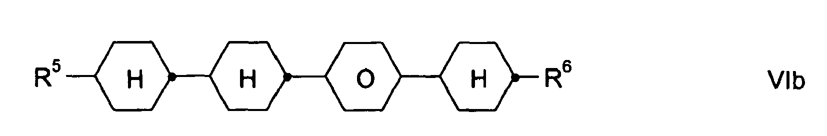 worin R⁵ und R⁶ unabhängig voneinander eine der für R¹ in Formel I angegebenen Bedeutungen besitzen und L H oder F bedeutet. R⁵ und R⁶ sind in diesen Verbindungen besonders bevorzugt C₁₋₆-alkyl oder -alkoxy.
e) Medium, welches zusätzlich eine oder mehrere Verbindungen ausgewählt aus den folgenden Formeln enthält: 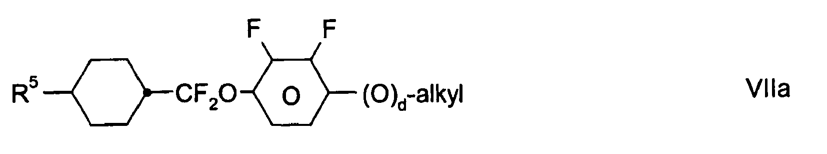 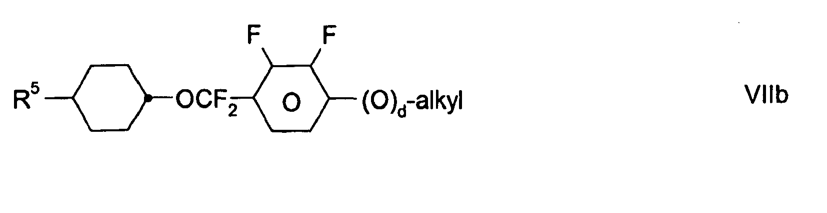 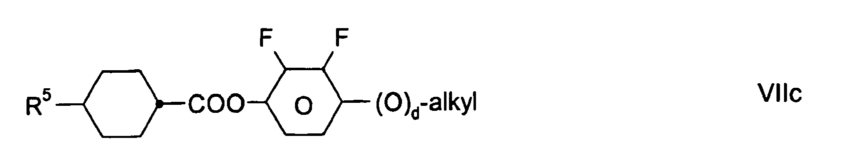 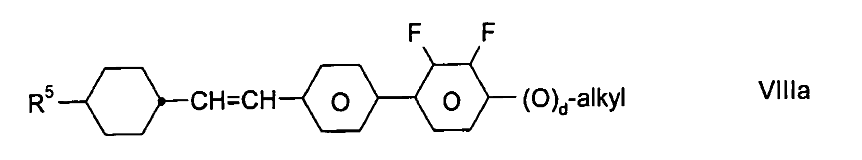 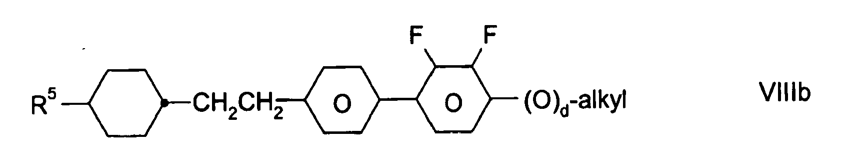 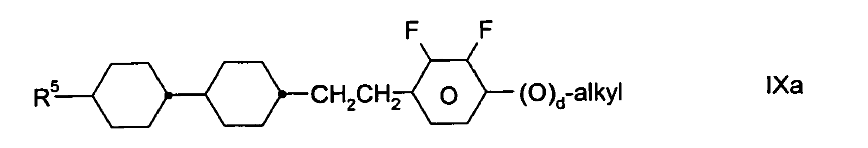 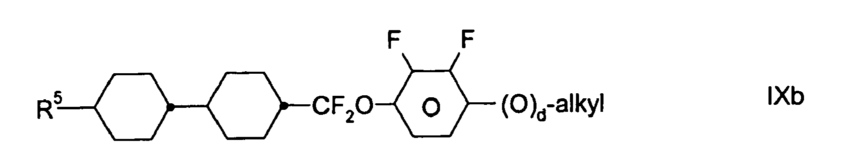 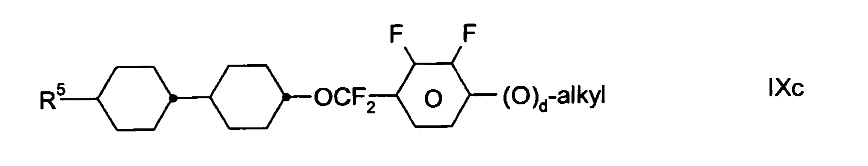 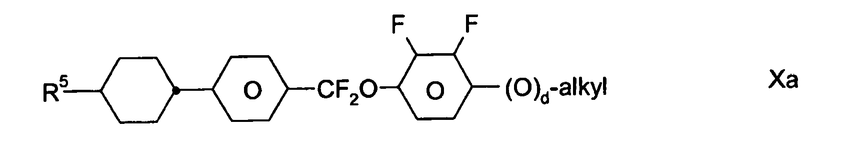 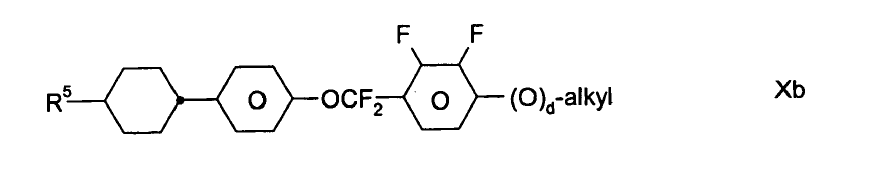 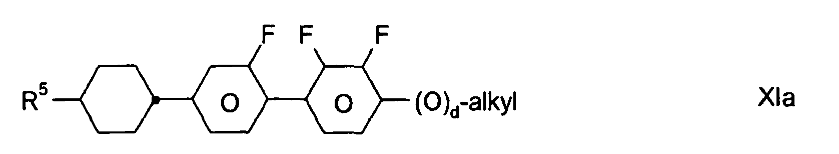 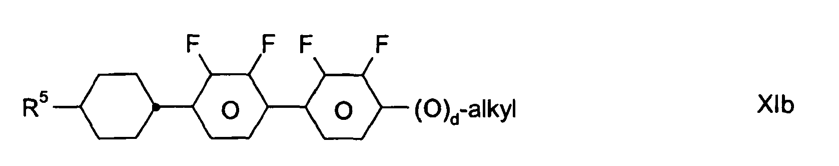 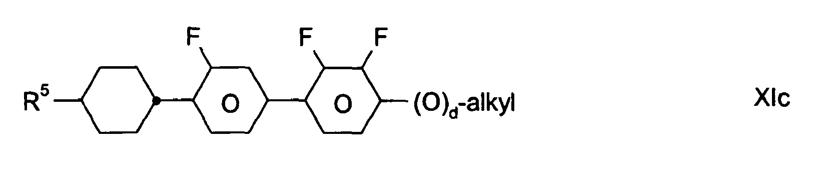 worin R⁵ und alkyl die oben angegebenen Bedeutungen besitzen und d 0 oder 1 bedeutet. R⁵ ist in diesen Verbindungen besonders bevorzugt C₁₋₆-alkyl oder -alkoxy, d ist vorzugsweise 1. Besonders bevorzugt sind Verbindungen der Formel Vllc, IXb und Xb.
f) Medium, welches zusätzlich eine oder mehrere Verbindungen der Formel XII enthält: 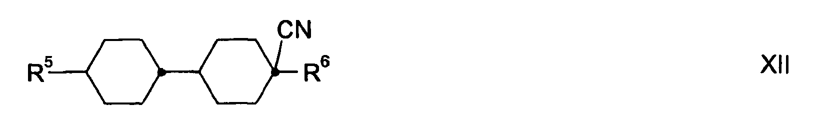 worin R⁵ und R⁶ die oben angegebenen Bedeutungen besitzen und vorzugsweise Alkyl mit 1 bis 8 C-Atomen bedeuten.
g) Medium, welches zusätzlich eine oder mehrere Verbindungen der Formel XIII enthält: 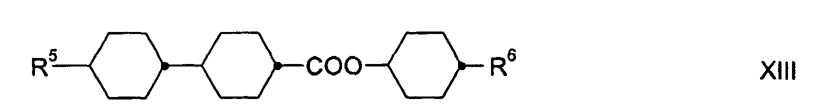 worin R⁵ und R⁶ die oben angegebenen Bedeutungen besitzen und vorzugsweise Alkyl mit 1 bis 8 C-Atomen bedeuten.
h) Medium, welches 1 bis 4, vorzugsweise 1 oder 2 Verbindungen der Formel I, 1 bis 6, vorzugsweise 1, 2, 3 oder 4 Verbindungen der Formel II und 1 bis 3, vorzugsweise 1 oder 2 polymerisierbare Verbindungen der Formel I* enthält.
i) Medium, welches im wesentlichen aus 1 bis 4 Verbindungen der Formel I, 1 bis 6 Verbindungen der Formel II, 1 bis 5 Verbindungen der Formel IV und 1 oder 2 polymerisierbaren Verbindungen der Formel I* besteht.
k) Medium, welches 1 bis 3, vorzugsweise 1 oder 2 polymerisierbare Verbindungen der Formel I*a, I*b oder I*c enthält.
l) Medium, worin der Anteil an Verbindungen der Formel I im Gesamtgemisch 5 bis 60 %, vorzugsweise 10 bis 40 % beträgt. Der Gehalt der einzelnen Verbindungen der Formel I beträgt vorzugsweise jeweils 2 bis 20 %.
m) Medium, worin der Anteil an Verbindungen der Formel II im Gesamtgemisch 10 bis 70 %, vorzugsweise 15 bis 60 % beträgt. Der Gehalt der einzelnen Verbindungen der Formel II beträgt vorzugsweise jeweils 2 bis 16 %.
n) Medium, worin der Anteil an Verbindungen der Formel III im Gesamtgemisch 2 bis 60 %, vorzugsweise 5 bis 50 % beträgt. Der Gehalt der einzelnen Verbindungen der Formel III beträgt vorzugsweise jeweils 2 bis 15 %.
o) Medium, worin der Anteil an Verbindungen der Formel IV und XIII im Gesamtgemisch 5 bis 70 %, vorzugsweise 10 bis 60 % beträgt.
p) Medium, worin der Anteil an polymerisierbaren Verbindungen im Gesamtgemisch 0,05 bis 10 %, vorzugsweise 0,1 bis 1 % beträgt.
q) Medium, welches im wesentlichen aus
   15 - 60 % einer oder mehrerer Verbindungen der Formel I,
   20 - 60 % einer oder mehrerer Verbindungen der Formel II,
   20 - 50 % einer oder mehrerer Verbindungen der Formel IV, und
   0,1 - 2 % einer oder mehrerer polymerisierbarer Verbindungen der Formel I*
   besteht.

Vorzugsweise weist die Flüssigkristallmischung einen nematischen Phasenbereich von mindestens 80 K, besonders bevorzugt von mindestens 100 K und eine Rotationsviskosität von nicht mehr als 250, vorzugsweise nicht mehr als 200 mPa·s auf.

Die erfindungsgemäße Flüssigkristallmischung weist eine dielektrische Anisotropie Δε von etwa -0,5 bis -7,5, insbesondere von etwa -2,8 bis -5,5 bei 20°C und 1 kHz auf.

Die Doppelbrechung Δn in der Flüssigkristallmischung liegt vorzugsweise unter 0,15, besonders bevorzugt zwischen 0,06 und 0,14, insbesondere zwischen 0,07 und 0,12.

Die Dielektrika können auch weitere, dem Fachmann bekannte und in der Literatur beschriebene Zusätze enthalten. Beispielsweise können 0 bis 15 Gew.-% pleochroitische Farbstoffe zugesetzt werden, ferner Leitsalze, vorzugsweise Ethyl-dimethyldodecylammonium-4-hexoxybenzoat, Tetrabutylammoniumtetraphenylborat oder Komplexsalze von Kronenethern (vgl. z.B. Haller et al., Mol. Cryst. Liq. Cryst. 24, 249-258 (1973)) zur Verbesserung der Leitfähigkeit, oder Substanzen zur Veränderung der dielektrischen Anisotropie, der Viskosität und/oder der Orientierung der nematischen Phasen. Derartige Substanzen sind z.B. in DE-A 22 09 127, 22 40 864, 23 21 632, 23 38 281, 24 50 088, 26 37 430 und 28 53 728 beschrieben.

Die einzelnen Komponenten der Formel I bis XIII und I* der erfindungsgemäßen Flüssigkristallmischungen sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren.

Entsprechende Verbindungen der Formel I und II werden beispielsweise in EP 0 364 538 beschrieben.

Entsprechende Verbindungen der Formel IV werden beispielsweise in EP 0 122 389, DE 26 36 684 und DE 33 21 373 beschrieben.

Neben den Verbindungen der Formeln I bis XIII können auch noch andere Bestandteile zugegen sein, z.B. in einer Menge von bis zu 45 Gew.-% der Gesamtmischung, vorzugsweise jedoch bis zu maximal 35 Gew.-%, insbesondere bis zu maximal 10 Gew.-%.

Die anderen Bestandteile werden vorzugsweise ausgewählt aus den nematischen oder nematogenen Substanzen, insbesondere den bekannten Substanzen aus den Klassen der Azoxybenzole, Benzylidenaniline, Biphenyle, Terphenyle, Phenyl oder Cyclohexylbenzoate, Cyclohexancarbonsäurephenyl oder -cyclohexylester, Phenylcyclohexane, Cyclohexylbiphenyle, Cyclohexylcyclohexane, Cyclohexylnaphthaline, 1,4-Bis-cyclohexylbiphenyle oder Cyclohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger Flüssigkristallmischungen in Frage kommenden Verbindungen lassen sich durch die Formel XIV charakterisieren

R⁸-L-G-E-R⁹ XIV

worin
- L und E: jeweils ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,
- G: -CH=CH- -N(O)=N-

-CH-CQ- -CH=N(O)-

-C≡C- -CH₂-CH₂-

-CO-O- -CH₂-O-

-CO-S- -CH₂-S-

-CH=N- -COO-Phe-COO-

oder eine C-C-Einfachbindung,
- Q: Halogen, vorzugsweise Chlor, oder CN, und
- R⁸ und R⁹: jeweils unabhängig voneinander Alkyl, Alkoxy, Alkanoyloxy oder Alkoxycarbonyloxy mit bis zu 18, vorzugsweise bis zu 8 C-Atomen, oder einer dieser Reste auch CN, NC, NO₂, CF₃, F, Cl oder Br
bedeuten.

Bei den meisten dieser Verbindungen sind R⁸ und R⁹ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, daß die erfindungsgemäße FK-Mischung auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z.B. in EP-A 0 240 379 beschrieben wird.

Die folgenden Beispiele sollen die Erfindung erläutern, ohne sie zu begrenzen. Vor- und nachstehend bedeuten Prozentangaben Gewichtsprozent, sofern nicht anders angegeben; alle Temperaturen sind in Grad Celsius angegeben.

Folgende Abkürzungen werden verwendet:

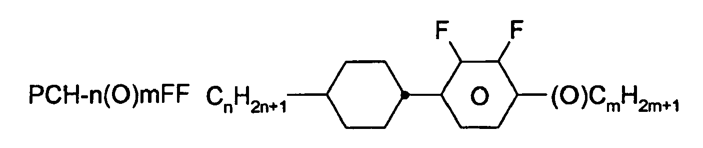

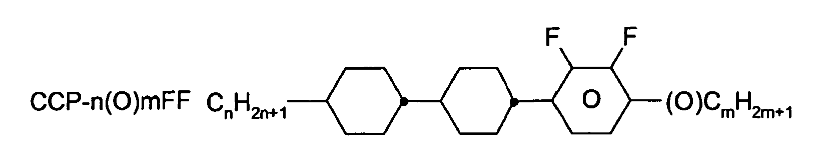

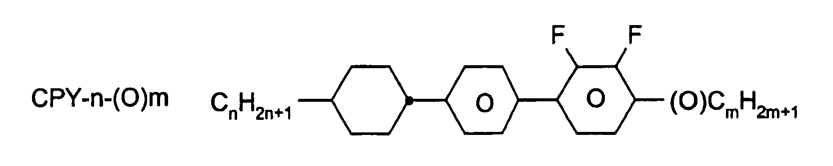

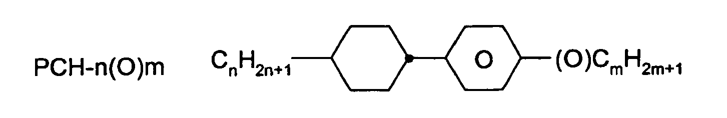

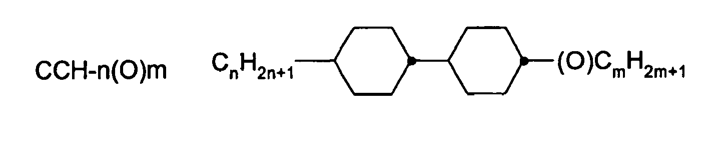

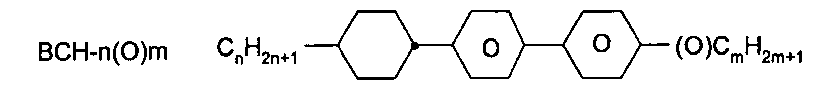

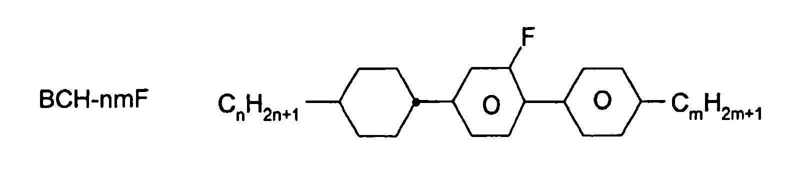

Weiterhin bedeuten:
- Kp.: Klärpunkt [°C]
- Δn: optische Anisotropie (Doppelbrechung) bei 20°C und 589 nm
- Δε: dielektrische Anisotropie bei 20°C und 1 kHz
- ε_{∥}: Dielektrizitätskonstante parallel zum Direktor bei 20°C und 1 kHz
- K₃/K₁: Verhältnis der elastischen Konstanten K₃ und K₁
- γ₁: Rotationsviskosität [mPa·s] (bei 20°C, sofern nicht anders angegeben)
- V₀: kapazitive Schwellenspannung [V]
- τ: Schaltzeit in msec

Die zur Messung der kapazitiven Schwellenspannung verwendete Anzeige weist zwei planparallele Trägerplatten im Abstand von 20 µm und Elektrodenschichten mit darüberliegenden Orientierungsschichten aus geriebenem Polyimid auf den Innenseiten der Trägerplatten auf, welche eine homöotrope Randorientierung der Flüssigkristallmoleküle bewirken.

Die polymerisierbaren Verbindungen werden in der Anzeige durch UV-Bestrahlung mit einer Stärke von 28 mW/cm² und einer Dauer von ca. 2 Minuten polymerisiert, wobei gleichzeitig eine Spannung an die Anzeige angelegt wird.

Die elektrooptischen Messungen werden bei transmissiver Beleuchtung (DMS 703 Meßsystem) bei 20°C vorgenommen.

### Beispiel 1

Die nematische Flüssigkristallmischung N1 wird wie folgt formuliert

| | | | |
|---|---|---|---|
| PCH-302FF | 16,00 % | Kp. | + 71,0 |
| PCH-502FF | 14,00 % | Δn | 0,0822 |
| CCP-302FF | 12,00 % | Δε | - 3,8 |
| CCP-502FF | 11,00 % | ε_{∥} | 3,6 |
| CCP-21 FF | 9,00 % | K₃/K₁ | 1,15 |
| CCP-31 FF | 8,00 % | γ₁ | 133 |
| CCH-34 | 8,00 % | V₀ | 2,10 |
| CCH-35 | 9,00 % | | |
| PCH-53 | 7,00 % | | |
| PCH-301 | 6,00 % | | |

Die polymerisierbaren Verbindungen A und B werden mit jeweils 2,1 % des UV-Photoinitiators Irgacure 651 (kommerziell erhältlich von Ciba AG) verschmolzen. Durch Zugabe von 0,5 % dieser Schmelze zu N1 werden die Mischungen P1A und P1B formuliert. Alternativ dazu können die polymerisierbaren Verbindungen A bzw. B, der Photoinitiator und N1 zusammen eingewogen und zu P1A und P1B formuliert werden.

| | N1 | A | B | Irg 651 |
|---|---|---|---|---|
| P1A | 99,5 % | 0,49 % | - | 0,01 % |
| P1B | 99,5 % | - | 0,49 % | 0,01 % |

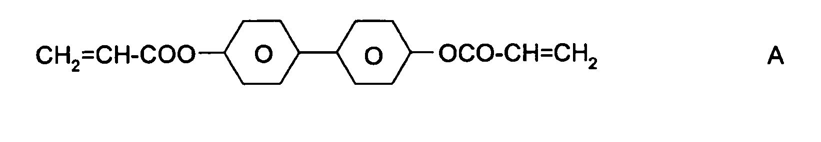

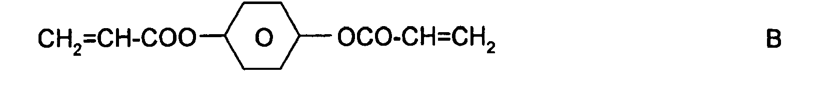

VA-Standardanzeigen werden mit den Mischungen N1, P1A und P1B befüllt und der Tiltwinkel, die "voltage holding ratio" (HR) vor und nach UV-Bestrahlung gemessen. Das Ergebnis ist in Tabelle 1 dargestellt.

**Tabelle 1: HR und Tiltwinkel der Mischungen N1, P1A, P1B vor und nach UV-Bestrahlung**

| | **VHR (5min/100°C)** | | **tilt [°] bei verschiedenen Spannungen nach 2 min UV mit 28 mW/cm²** | | | |
|---|---|---|---|---|---|---|
| | vor UV | nach 2 min UV 28 mW/cm² | 0V | 2,5V | 5V | 10V |
| N1 | 93,6 | 94,4 | 89,9 | 89,9 | 89,9 | 89,9 |
| P1A | 93,7 | 92,9 | 89,8 | 87,5 | 83,5 | 82,0 |
| P1B | 93,1 | 94,1 | 89,6 | 88,1 | 84,9 | 81,5 |

Nach der Polymerisation ist in den Mischungen P1A und P1B im Vergleich zu N1 abhängig von der während der Polymerisation angelegten Spannung eine deutliche Abweichung des Tiltwinkels von vorher ~89 - 90° erreicht worden (Einstellung eines Pretilt-Winkels). Tabelle 1 zeigt weiterhin, daß die Holding Ratio-Werte von P1A und P1B durch das Hinzufügen der polymerisierbaren Verbindung A und B im Vergleich zur Mischung N1 ohne polymerisierbare Verbindung nicht erniedrigt werden.

### Beispiel 2

Die nematischen Flüssigkristallmischungen N2, N3 und N4 werden wie folgt formuliert

| N2: | | | |
|---|---|---|---|
| PCH-302FF | 12,00 % | Kp. | + 90,0 |
| PCH-502FF | 12,00 % | Δn | 0,0830 |
| CCP-302FF | 14,00 % | Δε | - 4,2 |
| CCP-502FF | 13,00 % | ε_{∥} | 3,6 |
| CCP-21 FF | 13,00 % | K₃/K₁ | 1,08 |
| CCP-31 FF | 12,00% | γ₁ | 186 |
| CCH-34 | 6,00 % | V₀ | 2,17 |
| CCH-35 | 6,00 % | | |
| CCH-303 | 8,00 % | | |
| CCH-501 | 4,00 % | | |

| N3: | | | |
|---|---|---|---|
| PCH-302FF | 12,00 % | Kp. | + 79,5 |
| PCH-502FF | 13,00 % | Δn | 0,0996 |
| CCP-302FF | 11,00 % | Δε | -3,1 |
| CCP-502FF | 10,00 % | ε_{∥} | 3,5 |
| CCP-21 FF | 9,00 % | K₃/K₁ | 1,13 |
| BCH-32 | 6,00 % | γ₁ | 148 |
| BCH-52 | 4,00 % | V₀ | 2,45 |
| BCH-32F | 6,00 % | | |
| CCH-34 | 6,00 % | | |
| CCH-35 | 6,00 % | | |
| PCH-302 | 17,00 % | | |

| N4: | | | |
|---|---|---|---|
| PCH-304FF | 16,00 % | Kp. | + 70,0 |
| PCH-502FF | 16,00 % | Δn | 0,1023 |
| CCP-302FF | 13,00 % | Δε | -4,8 |
| CCP-502FF | 3,00 % | ε_{∥} | 4,0 |
| CPY-2-O2 | 13,00 % | K₃/K₁ | 1,15 |
| CPY-3-O2 | 11,50 % | γ₁ | 166 |
| CCH-35 | 8,50 % | V₀ | 1,83 |
| PCH-301 | 14,00 % | | |
| CCH-501 | 5,00 % | | |

Die polymerisierbare Verbindung A wird mit 2,1 % Irgacure 651 verschmolzen. Durch Zugabe von 0,5 % dieser Schmelze zu N2 - N4 werden die Mischungen P2 - P4 formuliert:

| | N2 | N3 | N4 | A | Irg 651 |
|---|---|---|---|---|---|
| P2 | 99,5 % | - | - | 0,49 % | 0,01 % |
| P3 | - | 99,5 % | - | 0,49 % | 0,01 % |
| P4 | - | - | 99,5 % | 0,49 % | 0,01 % |

VA-Standardanzeigen werden mit den Mischungen N1, P1A und P1B aus Beispiel 1 und den Mischungen N2 - N4 und P2 - P4 befüllt, 2 Minuten mit UV-Licht (28mW/cm²) bei einer angelegten Spannung von 10 Volt bestrahlt und danach deren elektrooptische Eigenschaften gemessen. Das Ergebnis ist in Tabelle 2 dargestellt.

**Tabelle 2: Elektrooptische Eigenschaften von N1-N4 und P1A-P4**

| | **N1** | **P1A** | **P1B** | **N2** | **P2** | **N3** | **P3** | **N4** | **P4** |
|---|---|---|---|---|---|---|---|---|---|
| Δn | 0,0822 | 0,0822 | 0,0822 | 0,083 | 0,083 | 0,0996 | 0,0996 | 0,1023 | 0,1023 |
| d [µm]¹⁾ | 4,0 | 4,0 | 4,0 | 4,0 | 4,0 | 3,3 | 3,3 | 3,2 | 3,2 |
| d*Δn | 0,33 | 0,33 | 0,33 | 0,33 | 0,33 | 0,33 | 0,33 | 0,33 | 0,33 |
| tilt [°] | 89,5 | 85,0 | 84,5 | 89,8 | 83,7 | 89,2 | 83,9 | 89,6 | 82,9 |
| V10 [V] | 2,57 | 2,35 | 2,34 | 2,63 | 2,36 | 2,95 | 2,73 | 2,22 | 1,95 |
| V25 [V] | 2,78 | 2,58 | 2,59 | 2,82 | 2,62 | 3,17 | 3,00 | 2,39 | 2,19 |
| V50 [V] | 3,29 | 3,12 | 3,21 | 3,33 | 3,22 | 3,77 | 3,68 | 2,85 | 2,76 |
| V90 [V] | 4,85 | 4,6 | 4,84 | 4,66 | 4,68 | 5,44 | 5,39 | 4,19 | 4,45 |
| τ [ms] V0-V90 | 30 | 22 | 21 | 40 | 25 | 13 | 12 | 19 | 15 |
| τ [ms] V25-V50 | 59 | 52 | 47 | 64 | 61 | 36 | 29 | 42 | 33 |

| | | | | | | | | | |
|---|---|---|---|---|---|---|---|---|---|
| ¹⁾ d = Schichtdicke des FK-Mediums | | | | | | | | | |

Die Schwellenspannungen der Mischungen P1A-P4 mit polymerisierten Verbindungen sind in allen Beispielen gegenüber der jeweiligen Ausgangsmischung N1-N4 erniedrigt. Weiterhin wurden alle Schaltzeiten, insbesondere auch die Graustufenschaltzeiten (gezeigt am Beispiel V25-V50), deutlich verringert.

## Patentansprüche

1. Flüssigkristallines Medium, **dadurch gekennzeichnet, daß** es eine oder mehrere Verbindungen der Formel I 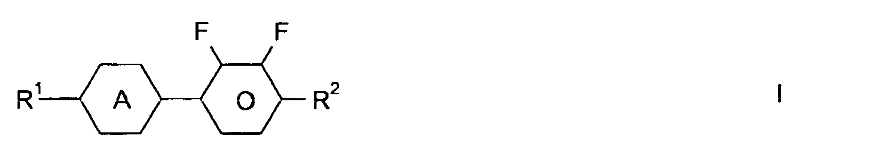 eine oder mehrere Verbindungen der Formel II 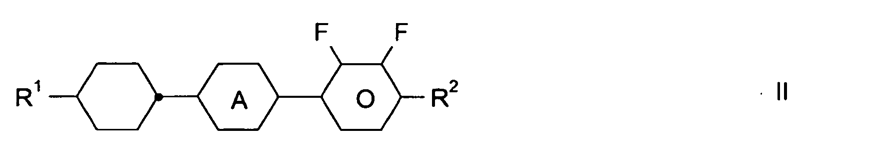 sowie eine oder mehrere polymerisierbare Verbindungen ausgewählt aus Formel I* enthält,
P¹-Sp¹-X¹-A¹-(Z¹-A²)ₙ-R I*
worin
R¹ und R² jeweils unabhängig voneinander Alkyl mit 1 bis 12 C-Atomen, wobei auch ein oder zwei nicht benachbarte CH₂-Gruppen durch -O-, -CO-, -OCO- oder -COO- so ersetzt sein können, daß O-Atome nicht direkt miteinander verknüpft sind, 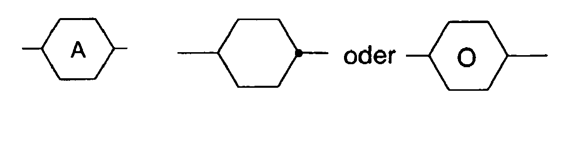
R H, F, Cl, CN, SCN, SF₅H, NO₂, geradkettiges oder verzweigtes Alkyl mit 1 bis 12 C-Atomen, wobei auch ein oder zwei nicht benachbarte CH₂-Gruppen durch -O-, -S-, -CO-, -OCO-, -COO-, -O-COO-, -S-CO-, -CO-S-, -CH=CH- oder -C=C- so ersetzt sein können, daß O- und/oder S-Atome nicht direkt miteinander verknüpft sind, oder -X²-Sp²-P²,
P¹ und P² jeweils unabhängig voneinander Acrylat, Methacylat, Vinyloxy, Propenylether oder Epoxy,
Sp¹ und Sp² jeweils unabhängig voneinander eine Abstandshaltergruppe oder eine Einfachbindung,
X¹ und X² jeweils unabhängig voneinander -O-, -S-, -OCH₂-, -CH₂O-, -CO-, -COO-, -OCO-, -OCO-O-, -CO-NR⁰-, -NR⁰-CO-, -OCH₂-, -CH₂O-, -SCH₂-, -CH₂S-, -CH=CH-COO-, -OOC-CH=CH- oder eine Einfachbindung,
A¹ und A² jeweils unabhängig voneinander 1,4-Phenylen, worin auch eine oder mehrere CH-Gruppen durch N ersetzt sein können, 1,4-Cyclohexylen, worin auch eine oder mehrere nicht benachbarte CH₂-Gruppen durch O und/oder S ersetzt sein können, 1,4-Cyclohexenylen, 1,4-Bicyclo-(2,2,2)-octylen, Piperidin-1,4-diyl, Naphthalin-2,6-diyl, Decahydronaphthalin-2,6-diyl, 1,2,3,4-Tetrahydronaphthalin-2,6-diyl oder Indan-2,5-diyl, wobei alle diese Gruppen unsubstituiert oder durch L ein- oder mehrfach substituiert sein können,
L F, Cl, CN oder Alkyl, Alkoxy, Alkylcarbonyl, Alkoxycarbonyl oder Alkylcarbonyloxy mit 1 bis 7 C-Atomen, worin auch ein oder mehrere H-Atome durch F oder Cl ersetzt sein können,
Z¹ -O-, -S-, -CO-, -COO-, -OCO-, -O-COO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=CH-, -CF=CF-, -C≡C-, -CH=CH-COO-, -OCO-CH=CH-, CR⁰R⁰⁰ oder eine Einfachbindung,
R° und R°° jeweils unabhängig voneinander H oder Alkyl mit 1 bis 4 C-Atomen, und
n 0, 1 oder 2
bedeuten.

2. Medium nach Anspruch 1, **dadurch gekennzeichnet, daß** die polymerisierbaren Verbindungen ausgewählt sind aus den folgenden Formeln 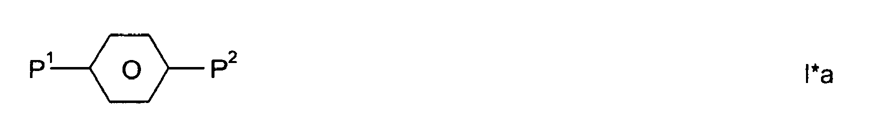 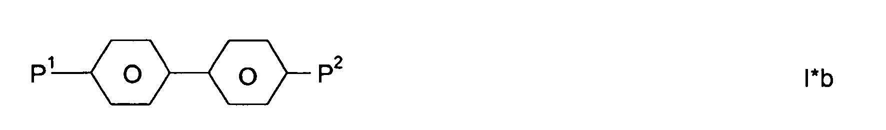 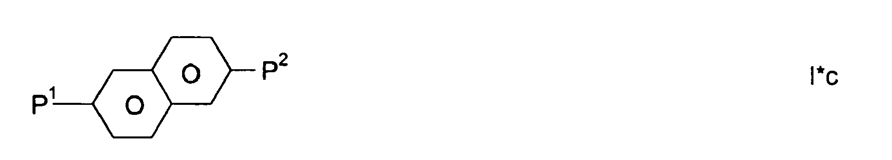 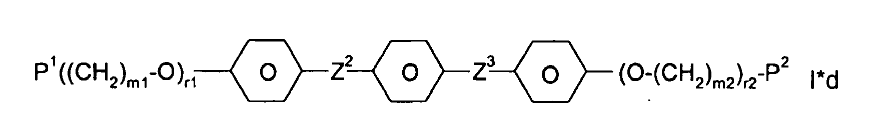 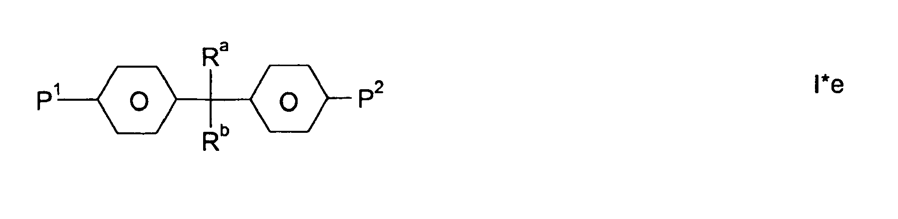 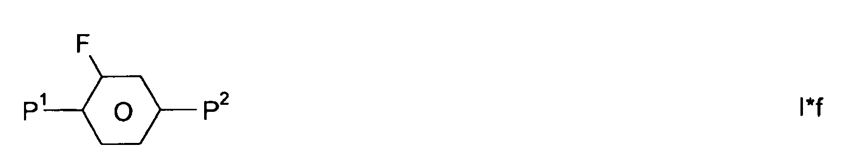 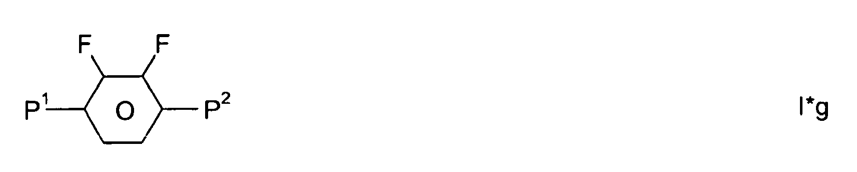 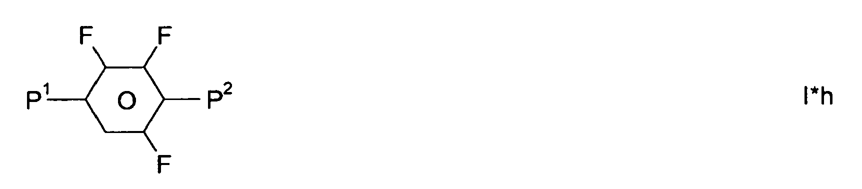 worin P¹ und P² die in Formel I* angegebene Bedeutung besitzen, Z² und Z³ jeweils unabhängig voneinander eine der für Z¹ in Anspruch 1 angegebenen Bedeutungen besitzen, m1 und m2 jeweils unabhängig voneinander 1 bis 8 bedeuten, r1 und r2 jeweils unabhängig voneinander 0 oder 1 bedeuten, und R^{a} und R^{b} jeweils unabhängig voneinander H oder CH₃ bedeuten.

3. Medium nach Anspruch 1 oder 2, **dadurch gekennzeichnet, daß** die Verbindungen der Formel I und II ausgewählt sind aus den folgenden Formeln 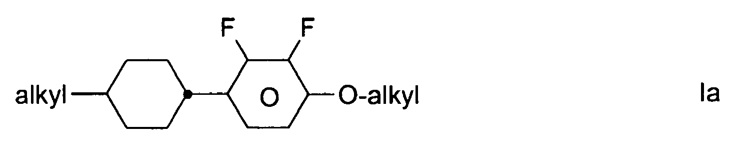 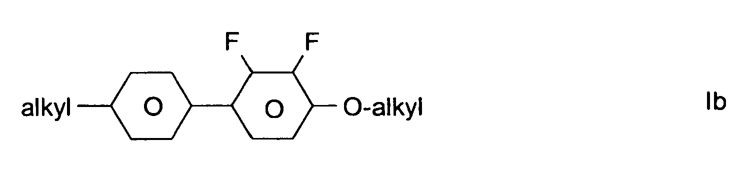 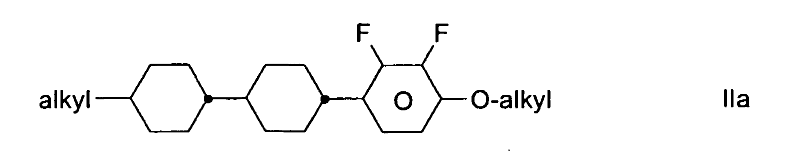 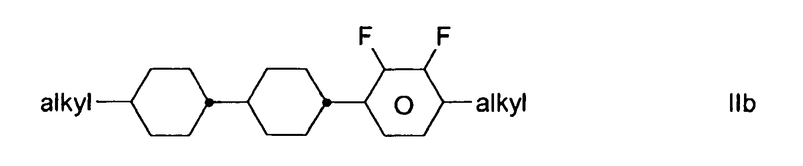 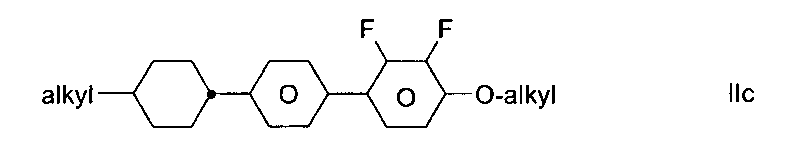 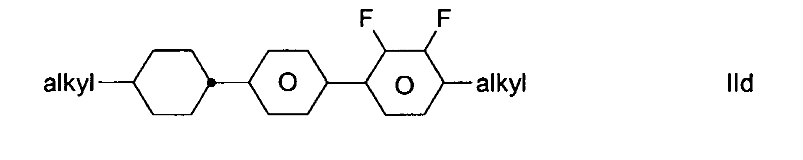 worin alkyl C₁₋₆-alkyl bedeutet.

4. Medium nach mindestens einem der Ansprüche 1 bis 3, **dadurch gekennzeichnet, daß** es zusätzlich eine oder mehrere Verbindungen der Formel III enthält 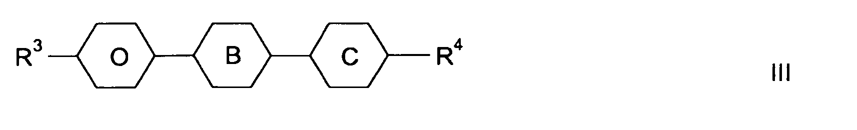 worin R³ und R⁴ unabhängig voneinander eine der für R¹ die in Anspruch 1 angegebenen Bedeutungen besitzen und 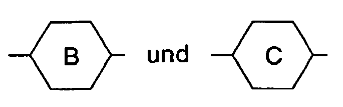 jeweils unabhängig voneinander 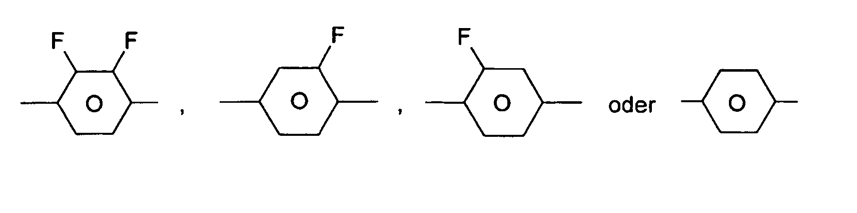 bedeuten.

5. Medium nach mindestens einem der Ansprüche 1 bis 4, **dadurch gekennzeichnet, daß** es zusätzlich eine oder mehrere Verbindungen der Formel IV enthält 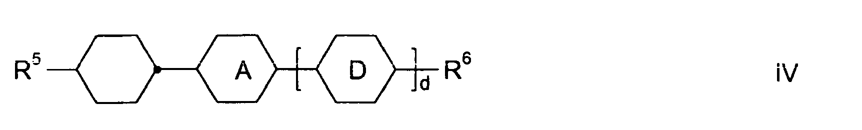 worin
R⁵ und R⁶ unabhängig voneinander eine der für R¹ in Anspruch 1 angegebenen Bedeutungen haben, 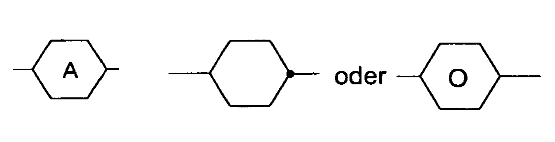 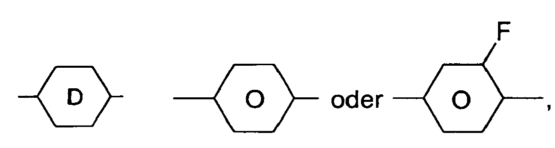 und
d 0 oder 1 bedeuten.

6. Medium nach mindestens einem der Ansprüche 1 bis 5, **dadurch gekennzeichnet, daß** es im wesentlichen aus 1 bis 4 Verbindungen der Formel I, 1 bis 6 Verbindungen der Formel II, 1 bis 5 Verbindungen der Formel IV und 1 oder 2 polymerisierbaren Verbindungen der Formel I* besteht.

7. Medium nach mindestens einem der Ansprüche 1 bis 6, **dadurch gekennzeichnet, daß** es im wesentlichen aus
15 - 60 % einer oder mehrerer Verbindungen der Formel I,
20 - 60 % einer oder mehrerer Verbindungen der Formel II,
20 - 50 % einer oder mehrerer Verbindungen der Formel IV, und
0,1 - 2 % einer oder mehrerer polymerisierbarer Verbindungen der Formel I*
besteht.

8. Elektrooptische Anzeige mit einer Aktivmatrix-Adressierung, **dadurch gekennzeichnet, daß** sie als Dielektrikum ein flüssigkristallines Medium nach mindestens einem der Ansprüche 1 bis 7 enthält.

9. Elektrooptische Anzeige nach Anspruch 8, **dadurch gekennzeichnet, daß** sie auf dem ECB-, VA-, MVA-, PVA-, DAP- oder CSH-Effekt beruht.

## Claims

1. Liquid-crystalline medium, **characterised in that** it comprises one or more compounds of the formula I 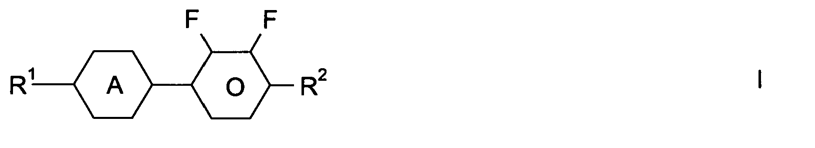 one or more compounds of the formula II 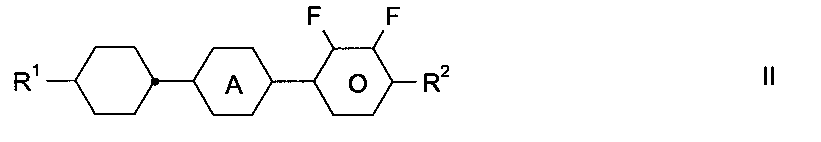 and one or more polymerisable compounds selected from formula I*
P¹-Sp¹-X¹-A¹-(Z¹-A²)ₙ-R I*
in which
R¹ and R² each, independently of one another, denote alkyl having 1 to 12 C atoms, in which, in addition, one or two non-adjacent CH₂ groups may be replaced by -O-, -CO-, -OCO- or -COO- in such a way that O atoms are not linked directly to one another, 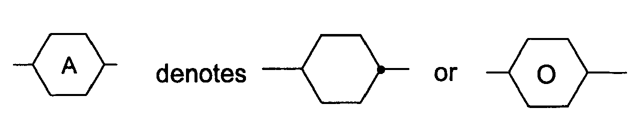
R denotes H, F, Cl, CN, SCN, SF₅H, NO₂, straight-chain or branched alkyl having 1 to 12 C atoms, in which, in addition, one or two non-adjacent CH₂ groups may be replaced by -O-, -S-, -CO-, -OCO-, -COO-, -O-COO-, -S-CO-, -CO-S-, -CH=CH- or -C≡C- in such a way that O and/or S atoms are not linked directly to one another, or -X²-Sp²-P²,
P¹ and P² each, independently of one another, denote acrylate, methacrylate, vinyloxy, propenyl ether or epoxy,
Sp¹ and Sp² each, independently of one another, denote a spacer group or a single bond,
X¹ and X² each, independently of one another, denote -O-, -S-, -OCH₂-, -CH₂O-, -CO-, -COO-, -OCO-, -OCO-O-, -CO-NR⁰-, -NR⁰-CO-, -OCH₂-, -CH₂O-, -SCH₂-, -CH₂S-, -CH=CH-COO-, -OOC-CH=CH- or a single bond,
A¹ and A² each, independently of one another, denote 1,4-phenylene, in which, in addition, one or more CH groups may be replaced by N, 1,4-cyclohexylene, in which, in addition, one or more non-adjacent CH₂ groups may be replaced by O and/or S, 1,4-cyclo-hexenylene, 1,4-bicyclo(2,2,2)octylene, piperidine-1,4-diyl, naphthalene-2,6-diyl, decahydronaphthalene-2,6-diyl, 1,2,3,4-tetrahydronaphthalene-2,6-diyl or indane-2,5-diyl, where all these groups may be unsubstituted or mono- or polysubstituted by L,
L denotes F, Cl, CN or alkyl, alkoxy, alkylcarbonyl, alkoxycarbonyl or alkylcarbonyloxy having 1 to 7 C atoms, in which, in addition, one or more H atoms may be replaced by F or Cl,
Z¹ denotes -O-, -S-, -CO-, -COO-, -OCO-, -O-COO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=CH-, -CF=CF-, -C≡C-, -CH=CH-COO-, -OCO-CH=CH-, CR⁰R⁰⁰ or a single bond,
R° and R°° each, independently of one another, denote H or alkyl having 1 to 4 C atoms, and
n denotes 0, 1 or 2.

2. Medium according to Claim 1, **characterised in that** the polymerisable compounds are selected from the following formulae 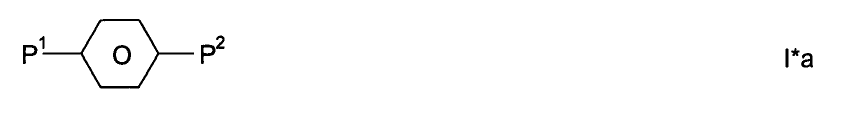 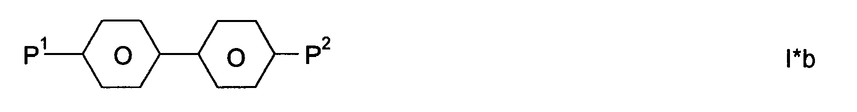 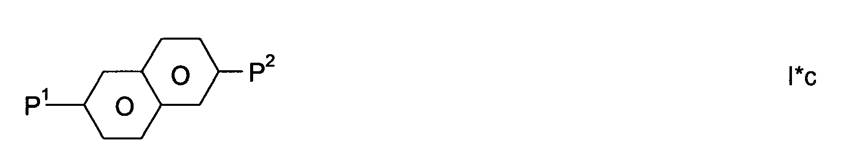 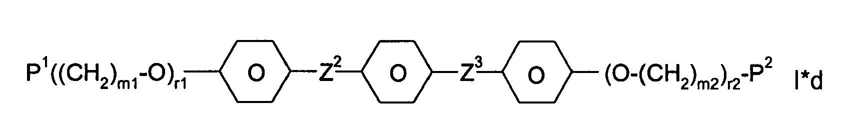 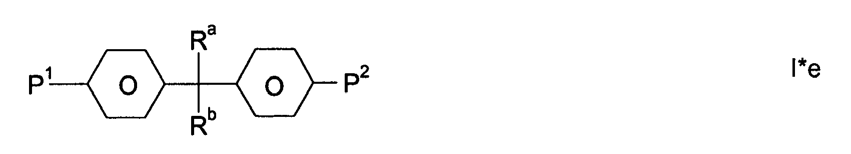 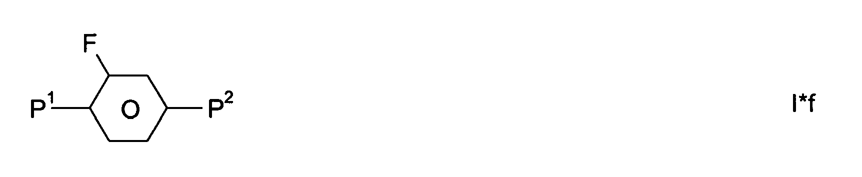 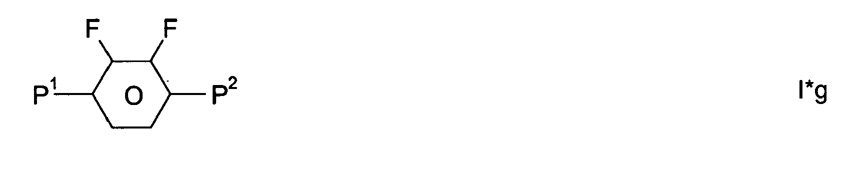 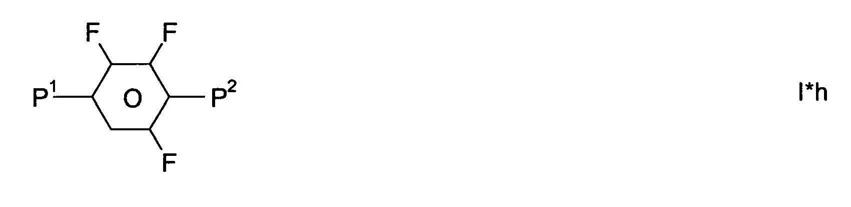 in which P¹ and P² have the meaning indicated in formula I*, Z² and Z³ each, independently of one another, have one of the meanings indicated for Z¹ in Claim 1, m1 and m2 each, independently of one another, denote 1 to 8, r1 and r2 each, independently of one another, denote 0 or 1, and R^{a} and R^{b} each, independently of one another, denote H or CH₃.

3. Medium according to Claim 1 or 2, **characterised in that** the compounds of the formulae I and II are selected from the following formulae 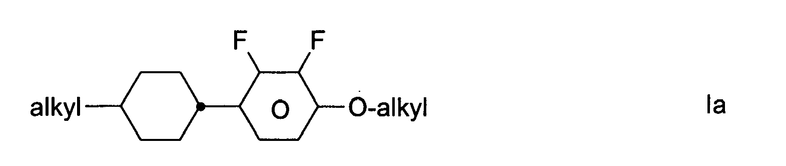 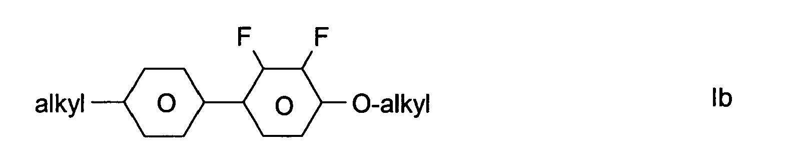 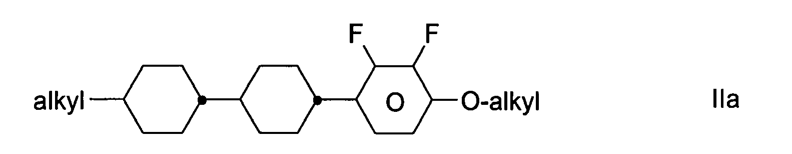 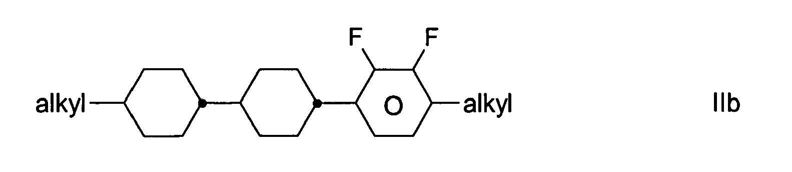 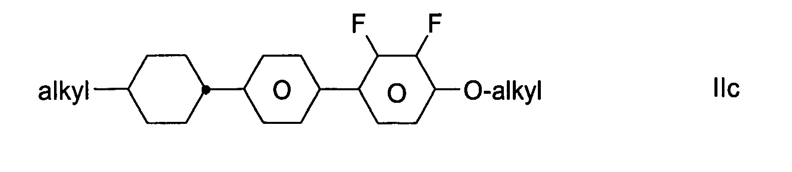 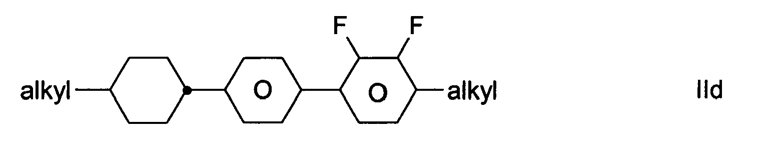 in which alkyl denotes C₁₋₆-alkyl.

4. Medium according to at least one of Claims 1 to 3, **characterised in that** it additionally comprises one or more compounds of the formula III 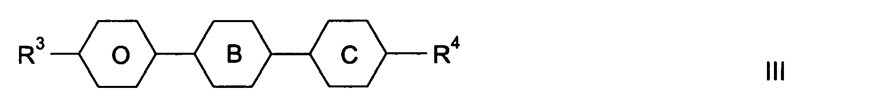 in which R³ and R⁴, independently of one another, have one of the meanings indicated for R¹ in Claim 1 and 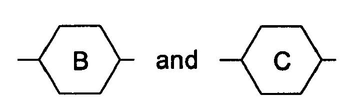 each, independently of one another, denote

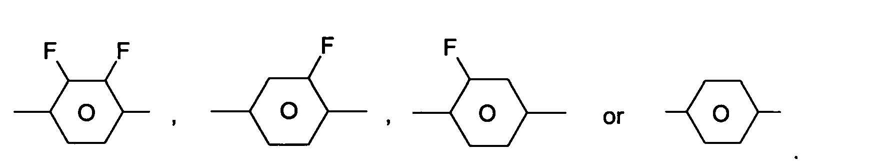

5. Medium according to at least one of Claims 1 to 4, **characterised in that** it additionally comprises one or more compounds of the formula IV 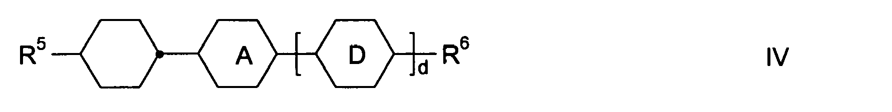 in which
R⁵ and R⁶, independently of one another, have one of the meanings indicated for R¹ in Claim 1, 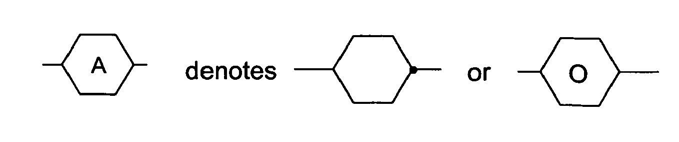 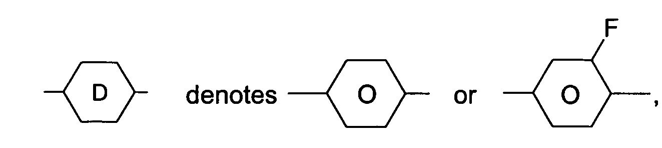 and
d denotes 0 or 1.

6. Medium according to at least one of Claims 1 to 5, **characterised in that** it essentially consists of 1 to 4 compounds of the formula I, 1 to 6 compounds of the formula II, 1 to 5 compounds of the formula IV and 1 or 2 polymerisable compounds of the formula I*.

7. Medium according to at least one of Claims 1 to 6, **characterised in that** it essentially consists of
15 - 60% of one or more compounds of the formula I,
20 - 60% of one or more compounds of the formula II,
20 - 50% of one or more compounds of the formula IV, and
0.1 - 2% of one or more polymerisable compounds of the formula I*.

8. Electro-optical display having active-matrix addressing, **characterised in that** it contains, as dielectric, a liquid-crystalline medium according to at least one of Claims 1 to 7.

9. Electro-optical display according to Claim 8, **characterised in that** it is based on the ECB, VA, MVA, PVA, DAP or CSH effect.

## Revendications

1. Milieu de cristal liquide, **caractérisé en ce qu'**il comprend un ou plusieurs composés de la formule I 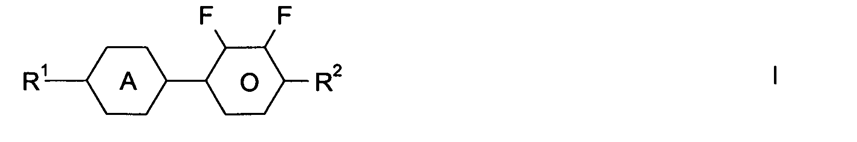 un ou plusieurs composés de la formule II 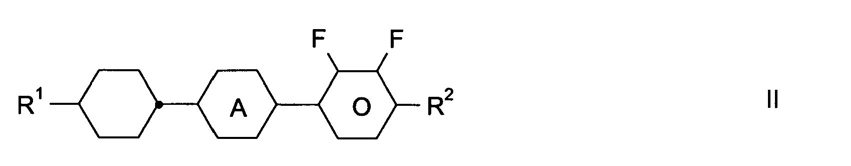 et un ou plusieurs composés polymérisables choisis à partir de la formule I*
P¹-Sp¹-X¹-A¹-(Z¹-A²)ₙ-R I*
dans lesquelles
R¹ et R² chacun indépendamment l'un de l'autre, représentent alkyle comportant de 1 à 12 atomes de C où, en plus, un ou deux groupes CH₂ non adjacents peuvent être remplacés par -O-, -CO-, -OCO- ou -COO- de telle sorte que des atomes de O ne soient pas liés directement les uns aux autres, 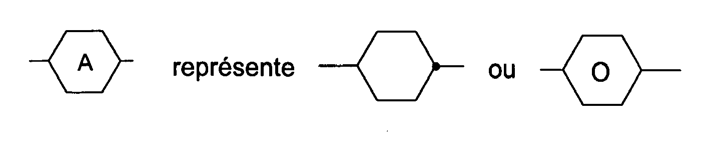
R représente H, F, CI, CN, SCN, SF₅H, NO₂, alkyle en chaîne droite ou ramifié comportant de 1 à 12 atomes de C, où, en plus, un ou deux groupes CH₂ non adjacents peuvent être remplacés par -O-, -S-, -CO-, -OCO-, -COO-, -O-COO-, -S-CO-, -CO-S-, -CH=CH- ou -C≡C-de telle sorte que des atomes de O et/ou de S ne soient pas liés directement les uns aux autres, ou -X²-Sp²-P²,
P¹ et P² chacun indépendamment l'un de l'autre, représentent acrylate, méthacrylate, vinyloxy, éther de propényle ou époxy,
Sp¹ et Sp² chacun indépendamment l'un de l'autre, représentent un groupe d'espaceur ou une liaison simple,
X¹ et X² chacun indépendamment l'un de l'autre, représentent -O-, -S-, -OCH₂-, -CH₂O-, -CO-, -COO-, -OCO-, -OCO-O-, -CO-NR⁰-, -NR⁰-CO-, -OCH₂-, -CH₂O-, -SCH₂-, -CH₂S-, -CH=CH-COO-, -OOC-CH=CH- ou une liaison simple,
A¹ et A² chacun indépendamment l'un de l'autre, représentent 1,4-phénylène où, en plus, un ou plusieurs groupes CH peuvent être remplacés par N, 1,4-cyclohexylène où, en plus, un ou plusieurs groupes CH₂ non adjacents peuvent être remplacés par O et/ou S, 1,4-cyclohexénylène, 1,4-bi-cyclo(2,2,2)octylène, pipéridine-1,4-diyle, naphthalène-2,6-diyle, décahydronaphthalène-2,6-diyle, 1,2,3,4-tétrahydronaphthalène-2,6-diyle ou indane-2,5-diyle, où tous ces groupes peuvent être non substitués ou mono- ou polysubstitués par L,
L représente F, CI, CN ou alkyle, alkoxy, alkylcarbonyle, alkoxycarbonyle ou alkylcarbonyloxy comportant de 1 à 7 atomes de C où, en plus, un ou plusieurs atomes de H peuvent être remplacés par F ou CI,
Z¹ représente -O-, -S-, -CO-, -COO-, -OCO-, -O-COO-, -OCH₂-, -CH₂O-, -SCH₂-, -CH₂S-, -CF₂O-, -OCF₂-, -CF₂S-, -SCF₂-, -CH₂CH₂-, -CF₂CH₂-, -CH₂CF₂-, -CF₂CF₂-, -CH=CH-, -CF=CF-, -C≡C-, -CH=CH-COO-, -OCO-CH=CH-, CR⁰R⁰⁰ ou une liaison simple,
R° et R°° chacun indépendamment l'un de l'autre, représentent H ou alkyle comportant de 1 à 4 atomes de C ; et
n représente 0, 1 ou 2.

2. Milieu selon la revendication 1, **caractérisé en ce que** les composés polymérisables sont choisis parmi les formules qui suivent : 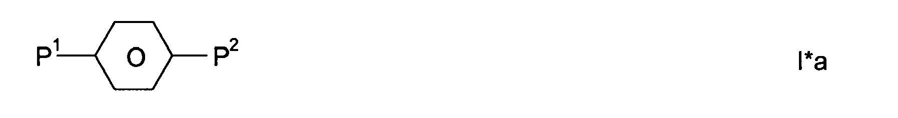 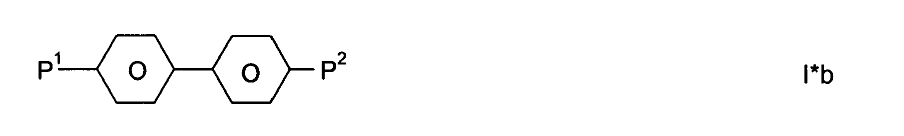 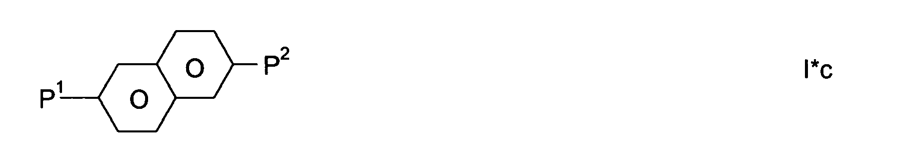 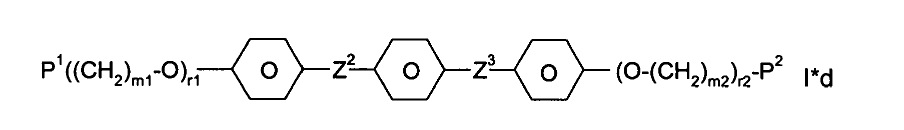 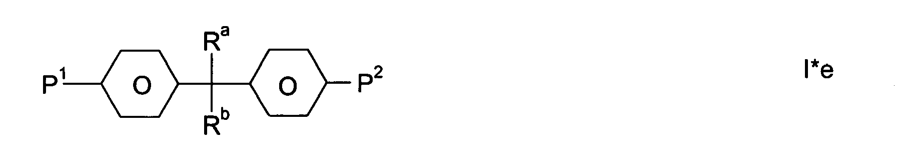 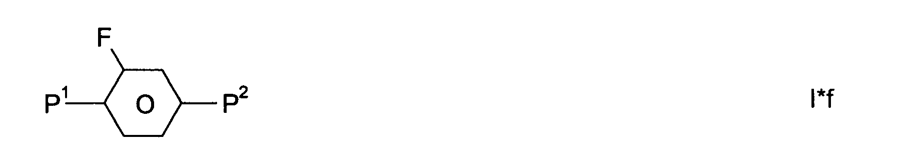 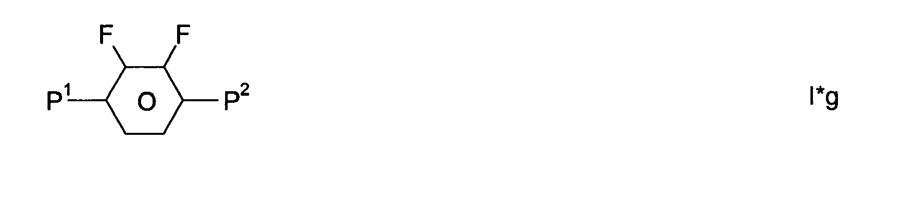 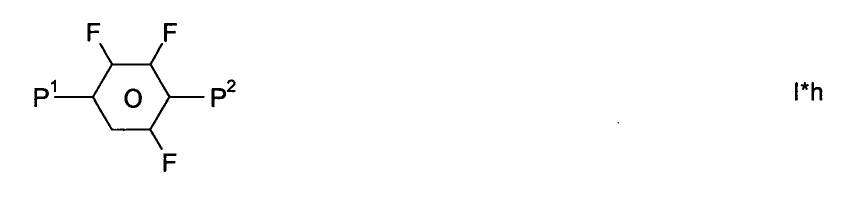 dans lesquelles P¹ et P² présentent la signification indiquée selon la formule I*, Z² et Z³, chacun indépendamment l'un de l'autre, présentent l'une des significations indiquées pour Z¹ selon la revendication 1, m1 et m2, chacun indépendamment l'un de l'autre, représentent 1 à 8, r1 et r2, chacun indépendamment l'un de l'autre, représentent 0 ou 1 et R^{a} et R^{b}, chacun indépendamment l'un de l'autre, représentent H ou CH₃.

3. Milieu selon la revendication 1 ou 2, **caractérisé en ce que** les composés des formules I et II sont choisis parmi les formules qui suivent : 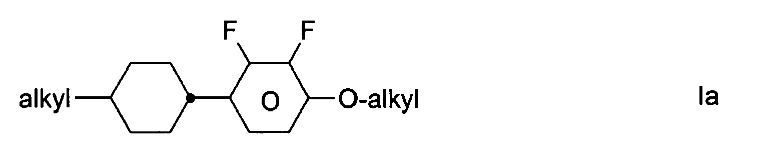 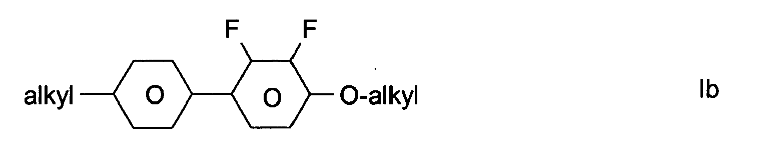 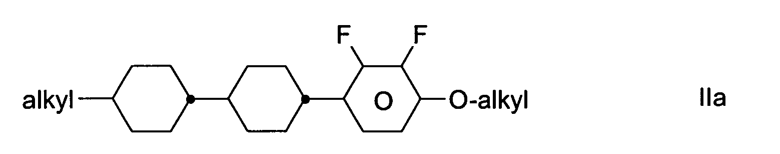 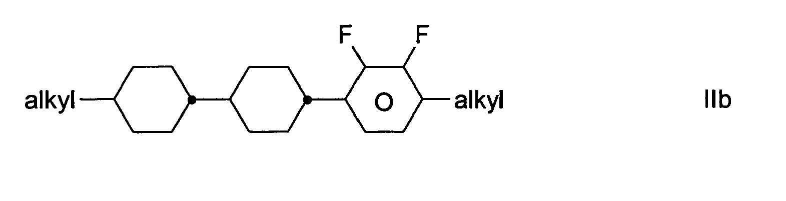 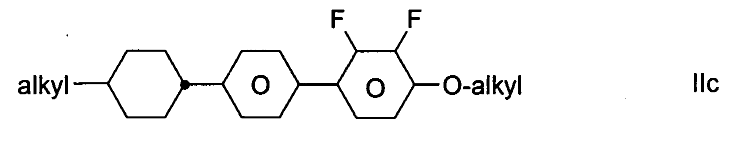 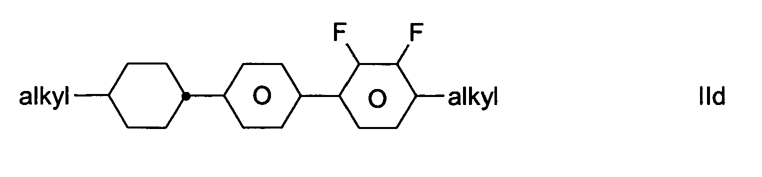 dans lesquelles alkyl représente C₁₋₆-alkyle.

4. Milieu selon au moins l'une des revendications 1 à 3, **caractérisé en ce qu'**il comprend de façon additionnelle un ou plusieurs composés de la formule III 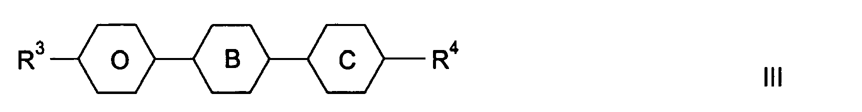 dans laquelle R³ et R⁴ indépendamment l'un de l'autre, présentent l'une des significations indiquées pour R¹ dans la revendication 1 et 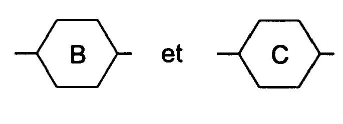 chacun indépendamment de l'autre, représentent

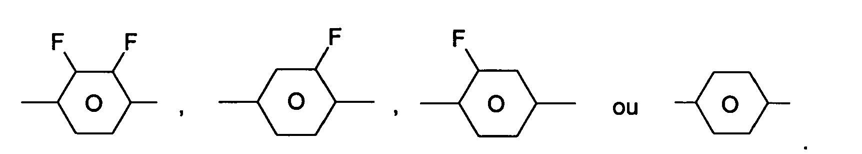

5. Milieu selon au moins l'une des revendications 1 à 4, **caractérisé en ce qu'**il comprend de façon additionnelle un ou plusieurs composés de la formule IV 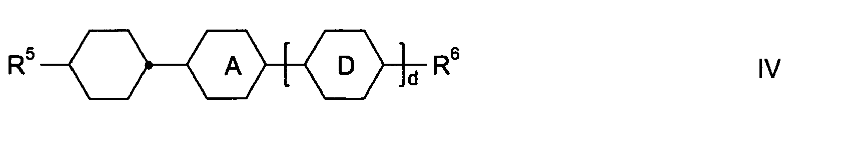 dans laquelle
R⁵ et R⁶ indépendamment l'un de l'autre, présentent l'une des significations indiquées pour R¹ dans la revendication 1 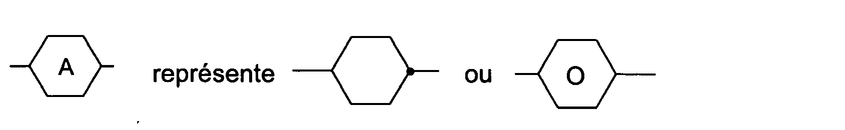 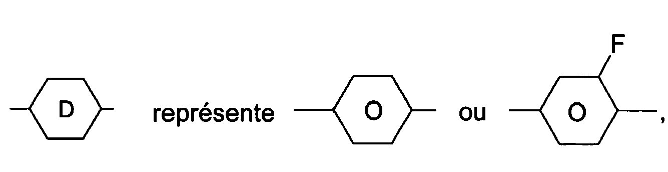 et
d représente 0 ou 1.

6. Milieu selon au moins l'une des revendications 1 à 5, **caractérisé en ce qu'**il est constitué essentiellement par de 1 à 4 composés de la formule I, de 1 à 6 composés de la formule II, de 1 à 5 composés de la formule IV et de 1 ou 2 composé(s) polymérisable(s) de la formule I*.

7. Milieu selon au moins l'une des revendications 1 à 6, **caractérisé en ce qu'**il est constitué essentiellement par
15 - 60% d'un ou de plusieurs composés de la formule I,
20 - 60% d'un ou de plusieurs composés de la formule II,
20 - 50% d'un ou de plusieurs composés de la formule IV, et
0,1 - 2% d'un ou de plusieurs composés polymérisables de la formule I*.

8. Affichage électro-optique présentant un adressage par matrice active, **caractérisé en ce qu'**il contient, en tant que diélectrique, un milieu de cristal liquide selon au moins l'une des revendications 1 à 7.

9. Affichage électro-optique selon la revendication 8, **caractérisé en ce qu'**il est basé sur l'effet ECB, VA, MVA, PVA, DAP ou CSH.
